# EUROPÄISCHE PATENTSCHRIFT

(11) **EP 3 650 130 B1**
(45) Veröffentlichungstag und Bekanntmachung des Hinweises auf die Patenterteilung: **24.08.2022**
(21) Anmeldenummer: 19196900.5
(22) Anmeldetag: 12.09.2019
(51) Int. Cl.: B08B 9/032, B65G 53/56, F16K 11/083

(54) **WEICHE FÜR DIE FÖRDERUNG VON FÖRDERGUT SOWIE VERFAHREN ZUM REINIGEN EINER DERARTIGEN WEICHE**
POINTS FOR TRANSPORTING TRANSPORTED GOODS AND METHOD FOR CLEANING POINTS
AIGUILLAGE DESTINÉ AU TRANSPORT DE LA MARCHANDISE À TRANSPORTER AINSI QUE PROCÉDÉ DE NETTOYAGE D'UN TEL AIGUILLAGE

(30) Priorität: 04.10.2018 DE 102018217034
(43) Veröffentlichungstag der Anmeldung: 13.05.2020
(73) Patentinhaber: Coperion GmbH, 70469 Stuttgart (DE)
(72) Erfinder: Zinser, Bruno, 88289 Waldburg (DE); Schädler, Manfred, 88213 Ravensburg (DE); Sprung, Jochen, 88214 Ravensburg (DE)
(74) Vertreter: Rau, Schneck & Hübner Patentanwälte Rechtsanwälte PartGmbB

(56) Entgegenhaltungen:
- EP-A1- 2 332 869
- WO-A1-2017/221048
- DE-C- 355 796
- DE-T2- 69 935 387
- Anonymous: "TUF-STEEL® - A full line of world champion gaskets", Rubber Fab Brochure, 1 January 2017 (2017-01-01), pages 1-12, XP055772910,

## Beschreibung

Die vorliegende Patentanmeldung nimmt die Priorität der deutschen Patentanmeldung DE 10 2018 217 034.7 in Anspruch.

Die Erfindung betrifft eine Weiche für die Förderung von Fördergut sowie ein Verfahren zum CIP-Reinigen einer derartigen Weiche.

Aus der DE 10 2005 061 432 A1 ist eine Rohrweiche mit einem Drehküken bekannt, das in einem Gehäuse zwischen einer Förderstellung und einer Reinigungsstellung verlagerbar ist. Die Drehachse des Kükens ist in der Förderebene der Rohrweiche angeordnet. Die Rohrweiche kann mit einer Reinigungs- und/oder Spülflüssigkeit gereinigt werden, ohne dass das Küken aus dem Gehäuse ausgebaut werden muss. Die Rohrweiche ermöglicht eine sogenannte Cleaning-in-Place (CIP)-Reinigung. Aufgrund der Anordnung des Kükens zwischen Durchgang und Abgang ergibt sich ein vergleichsweise kleiner Konuswinkel des Kükens, der zu einem vergleichsweisen langbauenden Küken führt. Zwischen dem langbauendem Küken und dem Gehäuse der Rohrweiche resultiert ein langer Spalt, dessen Abdichtung in der Förderposition problematisch sein kann. Um eine solche Weiche sicher zu reinigen, werden Spülöffnungen benötigt, um alle Bereiche im Inneren der Weiche zu reinigen.

Eine Förderrohrweiche mit einem Gehäuse und einem darin drehbar gelagerten Drehküken ist aus EP 2 332 869 B1 bekannt. Die Förderrohrweiche ermöglicht die CIP-Reinigung. Um die CIP-Reinigung zu ermöglichen, ist eine aufwendige Gestaltung der Drehkükens und des Gehäuses der Förderrohrweiche erforderlich, um einen in allen Raumrichtungen umlaufenden Spülspalt zwischen Drehküken und Gehäuse sicherzustellen. Die CIP-Reinigung mit der Förderrohrweiche ist fehleranfällig.

Die EHEDG-Richtlinie, Dokument 36 (Transfer systems for dry particulate materials, Ausgabe 06/2007) definiert Durchführungsbestimmungen für die CIP- Reinigung. DE 699 35 387 T2 offenbart eine Vorrichtung zum Mahlen von Getreide. Die Vorrichtung weist eine Ventilvorrichtung (Weiche) auf mit einem konischen Rotor und einem Stator, wobei der Rotor translatorisch bezüglich des Stators verlagerbar ist, gemäß dem Oberbegriff des Anspruchs 7.

Die EHEDG-Richtlinie, Dokument 41 (Diverter valves in process lines for dry particulate materials, Ausgabe 08/2011) beschreibt mögliche Lösungen für die hygienegerechte Ausführung von Förderrohrweichen.

Es ist eine Aufgabe der vorliegenden Erfindung, ein Verfahren zur zuverlässigen CIP-Reinigung einer Weiche für die Förderung von Fördergut bereitzustellen.

Diese Aufgabe ist erfindungsgemäß gelöst durch ein Verfahren mit den im Anspruch 1 angegebenen Merkmalen sowie durch eine Weiche mit den im Anspruch 7 angegebenen Merkmalen.

Erfindungsgemäß wurde erkannt, dass bei einer Weiche mit einem zumindest abschnittsweise konisch ausgeführten Drehteil ein definierter Spülspalt zwischen dem Drehteil und Gehäuse erzeugt werden kann, indem das Drehteil entlang seiner Drehachse in einem Gehäuse axial verlagert wird. Eine CIP-Reinigung kann sicher durchgeführt werden. Beispielsweise bewirkt eine Axialverlagerung des Drehteils entlang der Drehachse um etwa 10 mm einen ausreichend großen Spülspalt. Der Spülspalt ist definiert als senkrechter Abstand der Innenseite des Gehäuses zu einer Außenseite des Drehteils. Die Außenseite des Drehteils kann durch die Außenkontur des Drehteils oder ein daran vorstehendes Dichtungselement festgelegt sein. Durch die axiale Verlagerung des Drehteils kann die Weiche zwischen einer Förderstellung und einer Reinigungsstellung verlagert werden.

Durch das erfindungsgemäße Verfahren ist die Reinigung einer Weiche verbessert. Insbesondere ist das Reinigungsverfahren zuverlässig und insbesondere in einem geschlossenen Zustand der Weiche, d. h. mit montiertem Gehäusedeckel, möglich. Das Verfahren ermöglicht eine CIP-Reinigung.

Gemäß dem Verfahren, das das Drehen des Drehteils während der Zuführung einer Reinigungsflüssigkeit umfasst, ist die Betriebsweise der Weiche verbessert. Durch das vollständige Anliegen des Drehteils, insbesondere in dem Bereich der konusförmigen Ausführung am Gehäuseinnenkonus wird ein Radialspalt von bis zu 0 mm ausgeführt. Das bedeutet, dass in dieser Ausgestaltung ein spaltfreier Betrieb möglich ist. Zum Drehen des Drehteils, wird dieses in axialer Richtung geringfügig, beispielsweise um maximal 0,1 mm aus dem Gehäuse zurückgezogen. Daraus resultiert ein Drehspalt zwischen der Außenkontur des Drehteils und der Innenkontur des Gehäuses von 0,02 mm bis 0,2 mm. Wesentlich ist, dass der Drehspalt minimal ist, aber gerade so groß gewählt wird, dass das Drehteil im Gehäuse drehbar ist. Je kleiner der Drehspalt ist, desto weniger Produkt kann in den Spalt eindringen. Bei einem kleinen Drehspalt steigt aber auch das Risiko, dass sich im Gehäuse bereits abgesetztes Produkt beim Drehen einen mechanischen Widerstand darstellt und Reibungswärme entsteht. Bei der Festlegung des Drehspalts sind mögliche Produktablagerungen, Antriebskräfte und die Betriebssicherheit zu berücksichtigen.

Während der Zuführung von Spülflüssigkeit kann das Drehteil drehbar um die Drehachse und/oder axial zur Drehachse bewegt werden.

In einer dritten Position wird das Drehteil in eine Spülstellung axial gezogen beispielsweise um bis zu 40 mm. Dadurch entsteht ein Spülspalt mit einer Spaltbreite von 0,15 mm bis 8,0 mm. Dazu erhält der Axialantrieb, der insbesondere als Zylinder ausgeführt ist, drei definierte Positionen, die angefahren werden müssen.

In der Reinigungsstellung kann Reinigungsflüssigkeit, Spülflüssigkeit und/oder Trocknungsgas zuverlässig in die Weiche eingeleitet und aus der Weiche wieder ausgeleitet werden. Insbesondere ist eine aus dem Stand der Technik bekannte Ablauföffnung entbehrlich, die ein selbsttätiges Ablaufen von Flüssigkeiten aus dem Gehäuse ermöglicht. Überraschend wurde gefunden, dass eine derartige Ablauföffnung entfallen kann. Die Gestaltung der Weiche ist robust und vereinfacht. Der Herstellungsaufwand ist reduziert. Mögliche Kontaminationsstellen durch unzureichend gespülte Auslässe sind ausgeschlossen.

Erfindungsgemäß wurde erkannt, dass das Reinigungsergebnis dadurch verbessert werden kann, wenn das Drehteil entlang der Längsachse zumindest geringfügig aus dem Gehäuse herausgezogen und/oder um die Drehachse gedreht wird. Das Drehteil wird in eine sogenannte Drehmittelposition überführt, in der die Reinigung verbessert möglich ist. Dazu kann ein Drehantrieb, der die Rotation des Drehteils gegenüber dem Gehäuse bewirkt, mit einer ausgeprägten Mittelposition aufgeführt sein.

In der Drehmittelposition ist das Drehteil mit einem Durchgangskanal nicht fluchtend mit der mindestens einen Durchgangsöffnung angeordnet. Die nicht fluchtende Anordnung umfasst auch Zwischenpositionen, die von der Kanalebene abweichen, aber einen Reinigungseffekt für die Weiche bewirken.

Insbesondere ist die Mittelposition mittels des Drehantriebs gezielt ansteuerbar. Die Mittelposition des Drehantriebs ist zwischen den beiden Endpositionen des Drehantriebs angeordnet. Die Mittelposition ist insbesondere mittig zwischen den beiden Endpositionen angeordnet. Die Mittelposition kann auch außermittig angeordnet sein.

Alternativ ist es denkbar, dass die Drehmittelposition mittels des Drehantriebs bewusst "durchfahren" wird, wobei Reinigungsflüssigkeit, Spülflüssigkeit und/oder Trocknungsgas der Weiche "im Vorbeifahren" des Drehteils zugeführt wird. Bei einer derartigen Ausführung kann der Drehantrieb unkompliziert aufgeführt sein. Eine ausgeprägte Zwischenstellung ist nicht erforderlich. Insbesondere ist das Verfahren unkompliziert und mit reduziertem Zeitaufwand durchführbar, da ein Stoppen des Drehantriebs in der Mittelposition entbehrlich ist.

Der Spülspalt ist insbesondere so festgelegt, dass gewährleistet ist, dass eine zugeführte Spülflüssigkeit sämtliche Bereiche des Innenraums des Gehäuses und des Drehteils benetzt und umspült, also reinigt. Die Weiche erfüllt die Voraussetzungen für eine CIP-Reinigung. Dadurch, dass der Spülspalt aktiv erzeugt wird, ist eine zuverlässige Reinigung gewährleistet. Der Spülspalt kann in einem Bereich von 0,5 mm bis 4 mm festgelegt werden, insbesondere in einem Bereich zwischen 1,0 mm und 3,0 mm und insbesondere zwischen 1,5 mm und 2,0 mm. Der Spülspalt ist ausreichend groß, um eine störungsfreie Spülung und Reinigung der Weiche sicherzustellen. Störungen infolge eines unzureichenden und/oder unkontrolliert blockierten Spülspaltes sind ausgeschlossen. Bei dem erfindungsgemäßen Verfahren werden alle Bereiche des Gehäuses gereinigt, gespült und anschließend getrocknet. Dazu werden die Spalte mit heißem Gas, insbesondere Trocknungsluft, durchströmt, damit Flüssigkeitsrückstände abdampfen und aus der Weiche und der gesamten Förderanlage entfernt werden. Das heiße Gas weist eine Temperatur von mindestens 50°C, insbesondere 60°C, insbesondere 70°C, insbesondere 80°C, insbesondere 90°C, insbesondere 100°C, insbesondere 110°C insbesondere 120°C, insbesondere 130°C, insbesondere 140°C, insbesondere 150°C auf. Eine Reinigungsflüssigkeit kann Detergentien, Säuren, Laugen, Seifen, Tenside, Phosphate und Wasser sowie Spül- und/oder Lösungsmittel aufweisen. Die Reinigungsflüssigkeit kann auch ein Gemisch aus den vorstehend genannten Bestandteilen sein. Als Spülflüssigkeiten werden leichte Laugen oder Säuren zum Neutralisieren der Flüssigkeiten sowie reines Wasser verwendet. Das heiße Gas, insbesondere die Trocknungsluft, muss ausreichend gefiltert sein, um Keime jeder Art aus der Rohrleitung und damit aus der Weiche auszuschließen. Zur Sterilisierung der Luft kann sie entsprechend auch erhitzt werden weit über 100° C. Das heiße Gas zum Trocknen der Weiche ist keimfrei. Es kann auch trockener Dampf zum Trocknen und Sterilisieren verwendet werden. Das heiße Gas ist insbesondere so heiß, dass die Weiche zuverlässig getrocknet wird, aber Keime nicht weiter wachsen können und/oder Dichtungen nicht beschädigt werden. Ein entsprechender Temperaturbereich liegt insbesondere zwischen 60°C bis 120°C, insbesondere zwischen 80°C und 110°C. In Ausnahmefällen kann der Temperaturbereich bis 150°C betragen. Als Gas kann neben Umgebungsluft reiner Stickstoff und/oder reiner Sauerstoff zur Oxidation von organischen Bestandteilen und/oder Mischungen aus Sauerstoff und Stickstoff dienen, die von dem natürlichen Mischungsverhältnis von Umgebungsluft abweichen wie beispielsweise 40 % Sauerstoff und 60 % Stickstoff. Zusätzlich oder alternativ kann trockener überhitzter Dampf oder trockene Luft als Trocknungsgas verwendet werden. Vorteilhaft ist es, wenn das Trocknungsgas geeignet ist, Feuchte, insbesondere Wasser, aufzunehmen und aus der Weiche abzutransportieren.

Das Gehäuse weist mindestens drei Durchgangsöffnungen zum Zuführen oder Abführen des Förderguts wie auch der Reinigungsflüssigkeit und/oder der Spülflüssigkeit und/oder Trocknungsgas auf, wobei die Durchgangsöffnungen eine Förderebene festlegen. Insbesondere werden die Reinigungsflüssigkeit und die Spülflüssigkeit über dieselbe Durchgangsöffnung in das Gehäuse zugeführt. Die Drehachse des Drehteils ist senkrecht zu der Förderebene orientiert. Dadurch ist es möglich, die Drehung des Drehteils einerseits und die axiale Verlagerung des Drehteils andererseits auf zwei separate Antriebe aufzuteilen. Die beiden Antriebe können in axialer Richtung der Drehachse gegenüberliegend an dem Drehteil angeordnet werden. Dadurch ist eine Funktionstrennung der Antriebe möglich. Es ist zudem möglich, das Drehteil beidseitig bezüglich der Drehachse zu lagern. Dadurch ist die Führung der Drehbewegung des Drehteils verbessert, insbesondere präziser. Dadurch ist es insbesondere möglich, einen Radialspalt zwischen dem Drehteil und dem Gehäuse in der Förderstellung von 0,01 mm bis 0,5 mm festzulegen. Im Vergleich zu einer Rohrweiche gemäß der DE 10 2005 061 432 A1, bei der die Antriebsachse des Kükens in der Förderebene liegt, ist ein größerer Konuswinkel für die Ausführung des Drehteils möglich. Daraus ergeben sich Vorteile bei der Abdichtung des Drehteils im Gehäuse.

Gemäß einer besonderen Ausprägung ist die zumindest abschnittsweise konische Ausführung des Drehteils entlang der Drehachse auf den Abschnitt, in dem der Durchgangskanal verläuft, begrenzt. Das Drehteil ist in dieser Ausgestaltung im Wesentlichen auf den Durchgangskanal und den angrenzenden Dichtungsbereich beschränkt. Insbesondere kann das Drehteil auch abschnittsweise bezüglich des Umfangs konisch ausgeführt sein. Das Drehteil ist insbesondere segmentartig ausgeführt mit einem Öffnungswinkel bezüglich der Drehachse, der kleiner ist als 360°, insbesondere kleiner als 270°, insbesondere kleiner als 225°, insbesondere kleiner oder gleich 200°.

Eine der Durchgangsöffnungen ist eine Zuführöffnung, um Fördergut der Weiche zuzuführen. Mindestens zwei der Durchgangsöffnungen sind Abführöffnungen, um das Fördergut, insbesondere wahlweise, entlang der einen oder der anderen Abführöffnung abzuführen. Insbesondere ist genau eine Zuführöffnung vorgesehen, die wahlweise mit einer der genau zwei Abführöffnungen mittels des Durchgangskanals im Drehteil verbindbar ist. In dieser Ausführung ist die Weiche eine Verteilweiche.

Alternativ kann die erfindungsgemäße Weiche auch als Sammelweiche eingesetzt werden. Bei der Sammelweiche dienen mindestens zwei der Durchgangsöffnungen als Zuführöffnungen, um das Fördergut der Weiche zuzuführen. Insbesondere ist genau eine Abführöffnung vorgesehen, die wahlweise mit einer der genau zwei Zuführöffnungen mittels des Durchgangskanals im Drehteil verbindbar ist.

Insbesondere für die Festlegung des Förderwegs durch die Weiche ist das Drehteil um die Drehachse drehantreibbar in dem Gehäuse angeordnet. Das Drehteil weist einen Durchgangskanal auf, der in Abhängigkeit seiner Drehposition um die Drehachse die mindestens eine Zuführöffnung mit mindestens einer der Abführöffnungen zur Fördergutförderung verbindet. Der Durchgangskanal erstreckt sich entlang einer Durchgangskanal-Längsachse, die insbesondere geradlinig und insbesondere senkrecht zur Drehachse orientiert ist. Der Durchgangskanal weist zwei Durchgangskanal-Öffnungen auf, die an der konischen Außenkontur des Drehteils angeordnet sind. Die Durchgangskanal-Öffnungen weisen jeweils insbesondere eine geschlossene Außenkontur auf. Die Gehäusegeometrie weist insbesondere keine schlecht zu reinigenden Ecken auf. Die Herstellung des Gehäuses im Metallgussverfahren ist vereinfacht, insbesondere gegenüber der DE 10 2005 061 432 A1. Das Drehteil und ein Gehäusedeckel können vorteilhaft aus einem Halbzeug hergestellt werden. Insbesondere kann das Drehteil aus einem Rundmaterial gedreht werden, wobei insbesondere Verbindungswellen zu einem Axialantrieb und einem Drehantrieb stirnseitig an dem Rundmaterial fest verbunden sind. Insbesondere sind die Verbindungswellen mit dem Drehteil verschweißt. Insbesondere sind die freien Enden der Verbindungswellen in stirnseitige Vertiefungen an dem Drehteil eingesteckt und anschließend verschweißt, also eingeschweißt. Der Gehäusedeckel kann beispielsweise aus einem Dickblech hergestellt sein. Das Drehteil und der Gehäusedeckel eignen sich insbesondere für Hygieneanwendungen der Weiche, da Risse und Hohlräume, in welchen sich Produkt ablagern und zu Verunreinigungen führen könnte, vermieden sind.

Das Drehteil kann Ausnehmungen und/oder Durchbrüche aufweisen, die mit den Durchgangskanälen nicht verbunden sind. Die Ausnehmungen und/oder Durchbrüche sind insbesondere parallel zur Drehachse orientiert, d. h. die Ausnehmungen und/oder Durchbrüche erstrecken sich in einer Richtung entlang der Drehachse, insbesondere parallel zur Drehachse. Die Ausnehmungen und/oder Durchbrüche können eine runde, nierenförmige, halbmondförmige, kreissegmentförmige oder oval geformte Kontur aufweisen. Die Kontur der Durchbrüche und/oder Ausnehmungen ist in einer Ebene festgelegt, die senkrecht zur Drehachse, orientiert ist. Insbesondere ist die Kontur der Ausnehmungen und/oder Durchbrüche entlang der Durchbruchrichtung konstant. Die Ausnehmungen und/oder Durchbrüche können auch konisch oder doppelkonisch ausgeführt sein. Die doppelkonische Ausführung ist im Wesentlichen sanduhr-förmig, sodass die Querschnittsfläche des Durchbruchs zur Stirnseite des Drehteils hin zunimmt, um ein Abfließen der Reinigungsflüssigkeit zu verbessern. Bei einer doppelkonischen Ausführung ist das Ablaufen von Reinigungsflüssigkeit verbessert. Die Ausnehmungen und/oder Durchbrüche verbessern das Spülen der Deckelbereiche der Weiche. Wegen der Ausnehmungen und/oder Durchbrüche ist die Masse des Drehteils reduziert.

Ein Verfahren nach Anspruch 2 verbessert das Reinigungsergebnis.

Ein Verfahren nach Anspruch 3 gewährleistet einen verbesserten und insbesondere schnelleren Trocknungsvorgang. Die Geschwindigkeit sollte in der Rohrleitung zwischen 15 m/s und 40 m/s liegen. In den Spalten zwischen Gehäuse und Drehteil treten dann entsprechend höhere Geschwindigkeiten auf, die Wasser oder andere Reinigungs- und Spülflüssigkeiten von den Oberflächen, insbesondere vollständig, entfernen.

Ein Verfahren nach Anspruch 4 ermöglicht eine zusätzliche Verbesserung des Reinigungsvorgangs. Eine Drehmittelposition des Drehteils ist insbesondere dadurch definiert, dass das Drehteil und der Durchgangskanal nicht fluchtend mit der mindestens einen Durchgangsöffnung angeordnet sind. Spülmittel, Reinigungsmittel und/oder Trocknungsgas, das über die mindestens eine Durchgangsöffnung eingeleitet wird, strömt unmittelbar gegen die Außenkontur des Drehteils in den Spülspalt. Durch die Umlenkung und/oder Querschnittsverengung ergeben sich höhere Strömungsgeschwindigkeiten, die zu einem verbesserten Reinigungs- und Trocknungsergebnis führen. Insbesondere können in der Drehmittelposition des Drehteils Bereiche des Gehäuses gereinigt werden, die sonst nur schwer zugänglich sind.

Insbesondere weist das Gehäuse einen Gehäusegrundkörper mit einem damit lösbar verbundenen Gehäusedeckel auf. Der Gehäusedeckel ist insbesondere an dem Gehäusegrundkörper mittels Befestigungsschrauben befestigt. Vorteilhaft ist es, wenn die Innenfläche des Gehäusedeckels und/oder des Gehäusegrundkörpers zumindest bereichsweise geneigt ausgeführt sind. Dadurch wird der selbsttätige Abfluss der Spülflüssigkeit gefördert.

Eine Gehäusedeckel-Dichtung gemäß Anspruch 6 ist für die CIP-Reinigung der Weiche besonders vorteilhaft. Die Gehäusedeckel-Dichtung ist produktberührend ausgeführt, also vom Innenraum des Gehäuses für Produkt und Spülflüssigkeit zugänglich. Die Gehäusedeckel-Dichtung ist spaltfrei angeordnet. Dadurch ist verhindert, dass sich Produkt in einem Spalt, insbesondere zwischen dem Gehäusegrundkörper und der Gehäusedeckel-Dichtung bzw. der Gehäusedeckel-Dichtung und dem Gehäusedeckel, ablagern kann und insbesondere zu Keimwachstum führt.

Ein Axialantrieb gemäß Anspruch 7 ermöglicht das axiale Verlagern des Drehteils entlang der Drehachse. Dadurch kann das Drehteil unmittelbar in dem Gehäuse axial verlagert werden. Aufgrund der Konizität von Drehteil und Gehäuse ergibt sich der Spülspalt unmittelbar. Mittels des Axialantriebs kann das Drehteil für die Förderstellung mit einer definierten Andrückkraft in das Gehäuse gedrückt werden. Der Axialantrieb ist insbesondere ein Pneumatikantrieb mit einem Zylinder. Der axiale Verstellweg ergibt sich durch den Hub des Zylinders. Aus dem Hub des Zylinders und dem Konuswinkel ergibt sich die Breite des Spülspalts in der Reinigungsstellung. Der Pneumatikantrieb ist unkompliziert und kosteneffektiv ausgeführt. Grundsätzlich sind auch andere Antriebe, insbesondere ein Elektromotor oder ein Hydraulikantrieb denkbar.

Um den Betrieb der Weiche zu verbessern, kann auch ein axial wirkender Pneumatikzylinder mit drei verschiedenen Zielpositionen vorgesehen sein. Die mittlere Position zwischen den beiden Endpositionen kann zum Drehen der Weiche verwendet werden, ohne einen zu großen Spalt zwischen Drehteil und Gehäuse zu erzeugen. Beim Reinigen kann die mittlere Position auch zu einer Erzeugung zusätzlicher Bewegungen der Spülflüssigkeit genutzt werden, wenn das Drehteil hin- und hergefahren wird.

Durchgangskanal-Dichtungselemente, die bezüglich einer Durchgangskanal-Längsachse umlaufend an dem Drehteil angeordnet sind, können zur Abdichtung des Durchgangskanals verwendet werden. Die Durchgangskanal-Dichtungselemente sind insbesondere aus einem Elastomermaterial hergestellt. Bei der Verwendung der Durchgangskanal-Dichtungselemente ist es vorteilhaft, wenn der Radialspalt zwischen der Außenkontur des Drehteils und der Innenkontur des Gehäuses gegenüber der Spaltdichtung vergrößert ist. Der Radialspalt bei der Verwendung der Durchgangskanal-Dichtungselemente beträgt 0,2 mm bis 2,0 mm, insbesondere 0,3 mm bis 1,2 mm und insbesondere zwischen 0,4 mm und 0,8 mm.

Die Ausführung der Weiche, bei der die Durchgangskanal-Dichtungselemente jeweils in einer Dichtungsnut des Drehteils gehalten sind und an der Außenkontur des Drehteils mit einem Überstandsabschnitt vorstehen, gewährleistet eine zuverlässige und sichere Befestigung der Durchgangskanal-Dichtungselemente in Dichtungsnuten des Drehteils. Insbesondere sind die Durchgangskanal-Dichtungselemente in den Dichtungsnuten jeweils geklemmt angeordnet. Ein unbeabsichtigtes Herausziehen der Dichtungskanal-Dichtungselemente aus der jeweiligen Nut ist ausgeschlossen.

Eine Übergangsfase an dem Durchgangskanal-Dichtungselement, die mindestens eine Übergangsfase aufweist, gewährleistet einen bündigen Übergang der Oberflächen des Drehteils und des Durchgangskanal-Dichtungselements. Mittels der Übergangsfase ist ein sprunghafter Übergang zwischen der Oberfläche des Drehteils und der Oberfläche des Durchgangskanal-Dichtungselements verhindert. Die Übergangsfase ist beispielsweise als gerade, geneigte Fläche ausgeführt, kann aber insbesondere eine konvex geformte Kontur, die insbesondere auch ballig, kugelförmig oder gekrümmt ausgeführt sein kann, aufweisen.

Zusätzlich oder alternativ zu der Übergangsfase kann das Durchgangskanal-Dichtungselement einen Übergangsabschnitt aufweisen, um einen bündigen Übergang der Oberflächen des Drehteils und des Durchgangskanal-Dichtungselements zu ermöglichen. Der Übergangsabschnitt kann insbesondere zumindest abschnittsweise gerade und insbesondere zumindest abschnittsweise gekrümmt, insbesondere abschnittsweise rund, ausgeführt sein.

Das Durchgangskanal-Dichtungselement kann in einer speziell ausgeformten O-Ringnut angeordnet sein, die durch die Dichtung vollständig ausgefüllt ist. Die Dichtungsnut ist insbesondere totraumfrei. Um die Abdichtwirkung zu verbessern, kann das Durchgangskanal-Dichtungselement als O-Ring mit einteilig angeformter Dichtlippe und/oder mit einer speziell geformten Dichtungskontur ausgeführt sein. Die Dichtlippe kann am Gehäuse anliegen, wenn das Drehteil in einer Endposition in das Gehäuse maximal axial eingefahren ist. Die Dichtungsnut kann insbesondere gerundete Übergänge aufweisen und/oder runde und gerade Abschnitte im Übergang der Drehteiloberfläche zur Dichtungsnut. Das Durchgangskanal-Dichtungselement ist insbesondere komplementär zur Dichtungsnut ausgeführt, wobei dessen Dichtfläche aus der Dichtungsnut mit einem Überstandsabschnitt vorsteht, also aus der Dichtungsnut herausragt.

Vorteilhaft ist es, wenn die Querschnittsform der Dichtung der Kontur der Dichtungsnut entspricht, sodass die Dichtungsnut durch die Dichtung, insbesondere vollständig, ausgefüllt ist.

Ein Drehantrieb gemäß Anspruch 8 ermöglicht das unmittelbare Rotieren des Drehteils im Gehäuse. Der Drehantrieb ist insbesondere als Pneumatikantrieb ausgeführt. Grundsätzlich sind auch andere Antriebe, insbesondere ein Elektromotor oder ein Hydraulikantrieb denkbar.

Während der Reinigung der Weiche kann der Drehantrieb zum Bewegen der Spülflüssigkeit genutzt werden. Bei einem Elektromotor oder einem Hydraulikantrieb lässt sich das Drehteil um 360° durchgehend drehen und erzeugt eine gleichmäßige Bewegung im Spülspalt. Bei einem pneumatischen Drehantrieb kann das Drehteil hin- und hergeschwenkt werden, um zusätzliche Bewegung im Spülspalt zu erzeugen.

Besonders vorteilhaft ist, dass der Axialantrieb und der Drehantrieb separat voneinander ausgeführt sind. Es ist möglich, die beiden Antriebe an den gegenüberliegenden Stirnseiten des Gehäuses anzuordnen. Der Axialantrieb ist insbesondere an der Stirnseite mit der größeren Stirnfläche des Gehäuses angeordnet. Durch die getrennte Herstellung und Anordnung der Antriebe ist der Aufbau der Weiche vereinfacht. Der Montageaufwand und die Herstellkosten sind reduziert. Während des Reinigens und/oder des Schaltens der Weiche können die Antriebe unabhängig voneinander bewegt werden.

Insbesondere ist vorteilhaft, dass das Drehteil, das auch als Drehküken bezeichnet wird, entlang der Drehachse beidseitig im Gehäuse gelagert werden kann. Dadurch ist die Führungsgenauigkeit verbessert und ermöglicht insbesondere einen kleineren Betriebsspalt zwischen der Außenkontur des Drehteils und der Innenkontur des Gehäuses.

Ein Konuswinkel gemäß Anspruch 9 ermöglicht eine stabile Betriebsweise der Weiche. Insbesondere ist das Risiko der Selbsthemmung und/oder des Kaltverschweißens des Drehteils im Gehäuse reduziert.

Ein Radialspalt gemäß Anspruch 10 dient zum Abdichten des Drehteils im Gehäuse. Der Radialspalt beträgt insbesondere zwischen 0,01 mm und 0,5 mm, insbesondere zwischen 0,02 mm und 0,3 mm, insbesondere zwischen 0,03 mm und 0,2 mm und insbesondere zwischen 0,05 mm und 0,1 mm. Die Abdichtung des Drehteils im Gehäuse mittels des Radialspalts wird auch als Spaltdichtung bezeichnet.

Alternativ kann das Drehteil gemäß Anspruch 11 unmittelbar an der Innenkontur des Gehäuses anliegen. Insbesondere liegt das Drehteil mit der konischen Außenkontur an der korrespondierend konisch ausgebildeten Innenkontur des Gehäuses an. Ein Radialspalt liegt dann nicht vor bzw. beträgt 0 mm. Es ist denkbar, den Radialspalt durch seine axiale Positionierung entlang der Drehachse im Gehäuse einzustellen und/oder in Abhängigkeit des Anlagedrucks des Drehteils im Gehäuse beim Einfahren des Drehteils in das Gehäuse festzulegen. Besonders vorteilhaft ist es, wenn die zumindest eine der aneinander liegenden Oberflächen von Gehäuse und Drehteil eine erhöhte Härte aufweisen. Das Gehäuse und das Drehteil bilden in diesem Fall eine Hart-Weich-Paarung. Es ist auch denkbar, dass die Oberflächen von Gehäuse und Drehteil gehärtet sind. Besonders vorteilhaft ist die Härtung mittels einer Chromschicht.

Konus-Dichtungselemente gemäß Anspruch 12 gewährleisten eine zusätzliche Abdichtung des Drehteils im Gehäuse. Insbesondere werden O-Ringe als Konus-Dichtungselemente verwendet. O-Ringe sind robust in der Anwendung und kosteneffizient einsetzbar.

Eine Dichtungsnut, in der das Durchgangskanal-Dichtungselement gemäß Anspruch 14 formschlüssig gehalten ist, ist insbesondere schwalbenschwanzförmig oder trapezförmig ausgeführt. Es ist auch denkbar, dass die Nutbreite nur in einer Richtung mit zunehmender Nuttiefe zunimmt. Vorteilhaft ist es, wenn auch das Durchgangskanal-Dichtungselement im Wesentlichen schwalbenschwanzförmig oder trapezförmig ausgeführt ist. Die Kontur des Durchgangskanal-Dichtungselements weist zwei parallele Seitenkanten auf, die durch zwei jeweils geneigt angeordnete Verbindungskanten miteinander verbunden sind. Die Verbindungskanten sind mit einem Flankenwinkel gegenüber den Seitenkanten orientiert. Der Flankenwinkel ist insbesondere größer als 45°, insbesondere größer als 60°, insbesondere größer als 75°, insbesondere größer als 80°, insbesondere größer als 85° und insbesondere größer als 88°. In jedem Fall ist der Flankenwinkel kleiner als 90°. Ein Flankenwinkel von 90° würde eine Rechteckkontur der Dichtungsnut bedeuten. In den Eckenbereichen, in welchen die Seitenkanten die Verbindungskanten schneiden, ist die Kontur des Durchgangskanal-Dichtungselements abgerundet. Insbesondere ist mindestens eine der Ecken der Kontur abgerundet. Es können auch mehrere und insbesondere alle Eckenbereiche abgerundet aufgeführt sein. Zumindest in dem Abschnitt, mit dem das Durchgangskanal-Dichtungselement innerhalb der Dichtungsnut angeordnet ist. Es sind auch andere Geometrien für das Durchgangskanal-Dichtungselement und die Dichtungsnut denkbar. Wesentlich ist, dass das Durchgangskanal-Dichtungselement in der Dichtungsnut, insbesondere in radialer Richtung, formschlüssig gehalten ist. Das Durchgangskanal-Dichtungselement füllt die Form der Nut weitgehend aus. Das Durchgangskanal-Dichtungselement füllt die Nut insbesondere vollständig aus. Das Durchgangskanal-Dichtungselement ist spaltfrei und totraumfrei in der Nut angeordnet. Die gesamte Oberfläche der Nut ist durch das Durchgangskanal-Dichtungselement abgedeckt. Das Durchgangskanal-Dichtungselement liegt vollflächig an der Innenfläche der Nut an. Das Durchgangskanal-Dichtungselement kann als dreidimensionale Formdichtung oder als im Wesentlichen zweidimensionale Flachdichtung ausgeführt sein. Ein unbeabsichtigtes Herausziehen des Durchgangskanal-Dichtungselements ist verhindert. Die Anordnung des Durchgangskanal-Dichtungselements in der Dichtungsnut ist zuverlässig.

Vorteilhaft ist es, wenn die Drehbewegung des Drehteils während der Reinigung, also während des Einleitens der Reinigungsflüssigkeit, einen Drehwinkel aufweist, der größer ist als ein erforderlicher Drehwinkel zur Positionsänderung des Drehteils für das Umschalten der Durchgangsöffnungen.

Besonders vorteilhaft ist es, wenn die Drehbewegung des Drehteils einen Drehwinkel aufweist, der größer ist als 360°.

Besonders vorteilhaft ist es, wenn die Drehbewegung und die Axialbewegung des Drehteils gleichzeitig erfolgen, also eine überlagerte Dreh- und Axialbewegung erfolgt. Diese überlagerte Bewegung ist im Wesentlichen eine Schraubbewegung. Alternativ können Drehbewegung und Axialbewegung des Drehteils, insbesondere auch abschnittsweise, sequenziell erfolgen, wobei die Reihenfolge der Sequenz nicht festgelegt sein muss. Wesentlich ist, dass das Drehteil von einer Arbeitsstellung, in der der Durchgangskanal zwischen zwei Durchgangskanal-Öffnungen festgelegt ist, in eine Reinigungsstellung überführt wird, wobei dafür Dreh- und/oder Axialbewegungen des Drehteils erforderlich sein können.

Bei einer Drehung des Drehteils in eine Zwischenposition können beide Durchgangsöffnungen, insbesondere gleichzeitig, gespült werden und gleichzeitig ist das Drehteil axial in die Spülposition verlagert.

Vorteilhaft ist es, wenn die Drehbewegung des Drehteils während der Reinigung, also während des Einleitens der Reinigungsflüssigkeit, einen Drehwinkel aufweist, der größer ist als ein erforderlicher Drehwinkel zur Positionsänderung des Drehteils für das Umschalten der Durchgangsöffnungen.

Besonders vorteilhaft ist es, wenn die Drehbewegung des Drehteils einen Drehwinkel aufweist, der größer ist als 360°.

Besonders vorteilhaft ist es, wenn die Drehbewegung und die Axialbewegung des Drehteils gleichzeitig erfolgen, also eine überlagerte Dreh- und Axialbewegung erfolgt. Diese überlagerte Bewegung ist im Wesentlichen eine Schraubbewegung. Alternativ können Drehbewegung und Axialbewegung des Drehteils, insbesondere auch abschnittsweise, sequenziell erfolgen, wobei die Reihenfolge der Sequenz nicht festgelegt sein muss. Wesentlich ist, dass das Drehteil von einer Arbeitsstellung, in der der Durchgangskanal zwischen zwei Durchgangskanal-Öffnungen festgelegt ist, in eine Reinigungsstellung überführt wird, wobei dafür Dreh- und/oder Axialbewegungen des Drehteils erforderlich sein können.

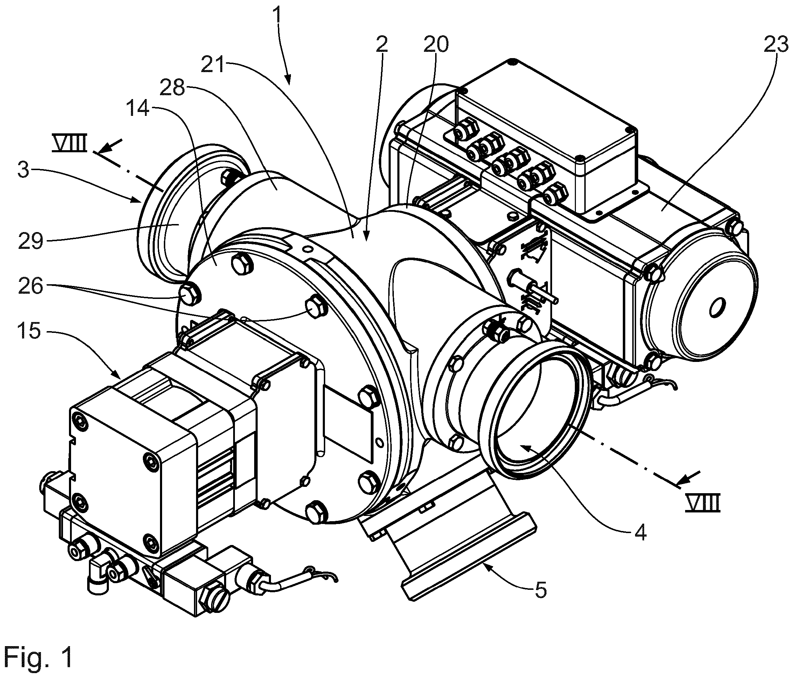

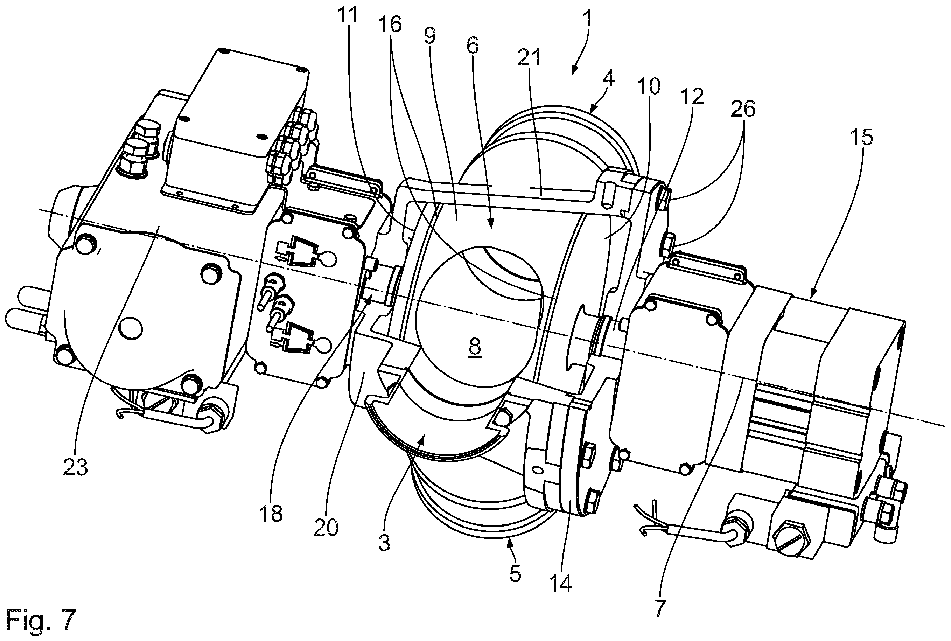

Bei einer Drehung des Drehteils in eine Zwischenposition können beide Durchgangsöffnungen, insbesondere gleichzeitig, gespült werden und gleichzeitig ist das Drehteil axial in die Spülposition verlagert.
- Fig 12: eine Fig. 10 entsprechende Schnittdarstellung gemäß einer weiteren Ausführungsform der Weiche, wobei das Drehteil Durchgangskanal-Dichtungselemente aufweist,
- Fig. 13: eine vergrößerte Detaildarstellung des Durchgangskanal-Dichtungselements gemäß Fig. 12,
- Fig. 14: eine perspektivische Darstellung eines Drehteils der Weiche gemäß Fig. 12,
- Fig. 15: eine Fig. 10 entsprechende Darstellung einer Weiche gemäß einer weiteren Ausführungsform, bei der das Drehteil mit seiner Außenkontur unmittelbar an einer Innenkontur des Gehäuses anliegt,
- Fig. 16: eine Fig. 2 entsprechende Schnittdarstellung einer Weiche mit dem Drehteil in einer rotatorischen Zwischenstellung zum Reinigen mit großem axialem Spalt in CIP-Spülstellung,
- Fig. 17: eine perspektivische Darstellung eines Drehteils mit einem Durchbruch,
- Fig. 18: eine Schnittdarstellung einer Weiche mit dem Drehteil gemäß Fig. 17,
- Fig. 19: eine Fig. 17 entsprechende Darstellung eines Drehteils gemäß einer weiteren Ausführungsform mit nierenförmigem Durchbruch,
- Fig. 20: eine Schnittdarstellung eines Drehteils gemäß einer weiteren Ausführungsform mit doppeltkonischem Durchbruch,
- Fig. 21: eine Fig. 19 entsprechende Darstellung eines Drehteils gemäß einer weiteren Ausführungsform als Segmentbauteil,
- Fig. 22: eine Schnittdarstellung des Drehteils gemäß Fig. 21,
- Fig. 23: eine Ansicht des Drehteils in Fig. 21 gemäß Pfeil XXIII,
- Fig. 24: eine Fig. 9 entsprechende Darstellung einer Weiche gemäß einer weiteren Ausführungsform mit Durchgangskanal-Dichtungselementen in weiterer Ausgestaltung,
- Fig. 25: eine vergrößerte Schnittansicht einer Dichtungsnut der Weiche gemäß Fig. 24,
- Fig. 26: eine vergrößerte Schnittdarstellung gemäß Fig. 25 mit eingelegtem Durchgangskanal-Dichtungselement,
- Fig. 27: eine Fig. 26 entsprechende Darstellung einer weiteren Ausführungsform des Durchgangskanal-Dichtungselements.
Eine Fig. 1 bis Fig. 11 dargestellte Weiche 1 dient zur Förderung von Fördergut. Das Fördergut ist beispielsweise Schüttgut, insbesondere partikelförmiges und/oder pulverförmiges Material, beispielsweise Kunststoffgranulat oder partikel- und/oder pulverförmige Lebensmittel. Das Schüttgut wird insbesondere pneumatisch gefördert. Das Fördergut kann auch eine pastöse Masse und/oder Flüssigkeit sein, also ein Fluid.

Die Weiche 1 ist als Drei-Wege-Weiche ausgeführt. Die Weiche 1 weist ein Gehäuse 2 auf, an dem eine erste Durchgangsöffnung 3, eine zweite Durchgangsöffnung 4 und eine dritte Durchgangsöffnung 5 vorgesehen sind. Die Durchgangsöffnungen 3, 4, 5 dienen zum Zuführen und/oder zum Abführen des Förderguts. Die Durchgangsöffnungen 3, 4, 5, insbesondere die Mittellinien der Durchgangsöffnungen 3, 4, 5, legen eine Förderebene fest.

In dem Gehäuse 2 ist ein Drehteil 6 angeordnet. Das Drehteil 6 weist eine Drehachse 7 auf, die senkrecht zur Förderebene orientiert ist. Das Drehteil 6 ist in dem Gehäuse 2 entlang der Drehachse 7 axial verlagerbar angeordnet. Die initiale Spalteinstellung zwischen der Außenkontur 9 des Drehteils 6 und der Innenkontur 17 des Gehäuses 2 erfolgt über die Festlegung der Axialposition des Drehteils 6 im Gehäuse 2. Diese Spalteinstellung erfolgt gemäß der gezeigten Ausführungsform mit einer Gewindehülse 32, über die beispielsweise mittels eines Werkzeugs von außerhalb des Gehäuses 2 eine stufenlose, also kontinuierliche Axialverstellung des Drehteils 6 im Gehäuse 2 möglich ist. Das Drehteil 6 ist im Gehäuse 2 um die Drehachse 7 drehbar angeordnet.

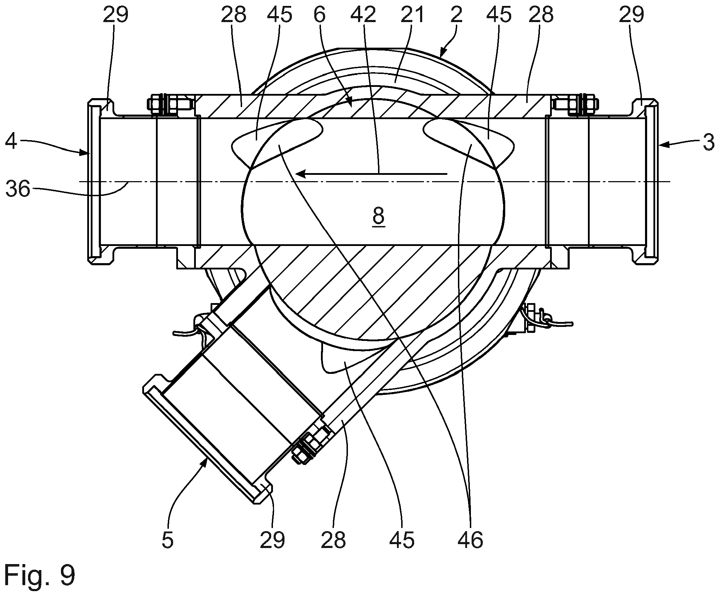

Das Drehteil 6 weist einen Durchgangskanal 8 auf. Das Drehteil 6 ist insbesondere in einer in Fig. 9 dargestellten Abgangsanordnung anordenbar, in der die erste Durchgangsöffnung 3 mit der dritten Durchgangsöffnung 5 über den Durchgangskanal 8 unmittelbar verbunden sind. In der Abgangsanordnung ist die zweite Durchgangsöffnung 4 durch das Drehteil 6 abgedichtet. Die Drei-Wege-Weiche 1 ermöglicht also, dass in der Abgangsanordnung die Durchgangsöffnungen 3, 5 für eine Materialförderung entlang einer Abgangsrichtung 41 miteinander verbunden sind und die Durchgangsöffnung 4 durch das Drehteil 6 abgesperrt ist.

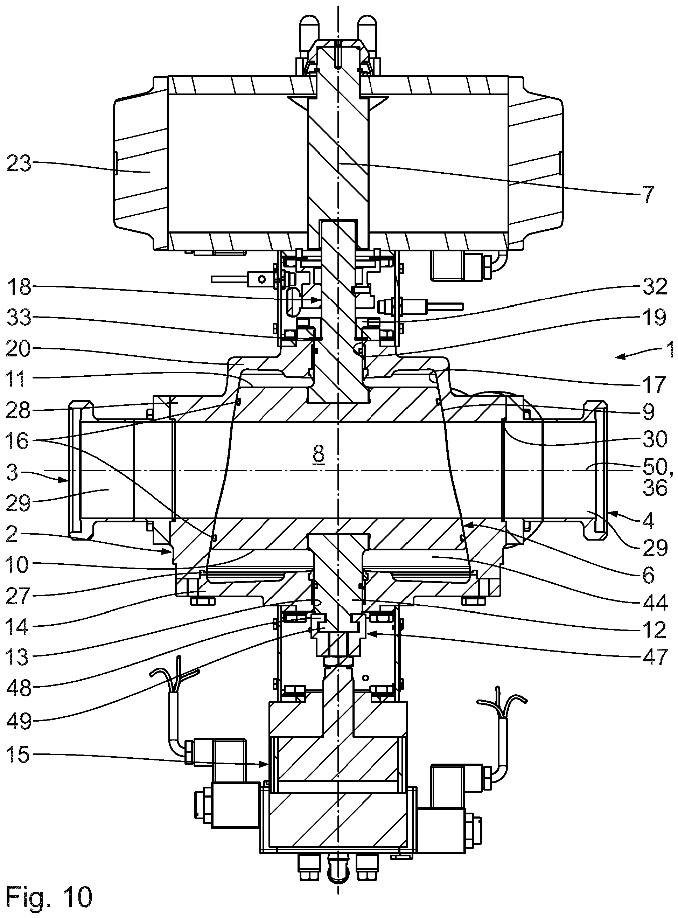

Entsprechend zeigt Fig. 10 eine Durchgangsanordnung, in der die erste Durchgangsöffnung 3 mit der zweiten Durchgangsöffnung 4 über den Durchgangskanal 8 miteinander zur Materialförderung entlang einer Durchgangsrichtung 42 verbunden sind. Zwischen der ersten Durchgangsöffhung 3 und der zweiten Durchgangsöffnung 4 ist die Durchgangsrichtung 42 geradlinig ausgeführt. Die erste Durchgangsöffnung 3 und die zweite Durchgangsöffnung 4 sind an dem Gehäuse 2 im Wesentlichen gegenüberliegend, insbesondere diametral gegenüberliegend angeordnet. Die dritte Durchgangsöffnung 5 ist durch das Drehteil 6 abgedichtet. Bezüglich der Durchgangsrichtung 42 zwischen der ersten Durchgangsöffnung 3 und der zweiten Durchgangsöffnung 4 ist die Abgangsrichtung 41 von der ersten Durchgangsöffnung 3 zu der dritten Durchgangsöffnung 5 unter einem Abgangswinkel β abgewinkelt. Gemäß dem gezeigten Ausführungsbeispiel beträgt der Abgangswinkel β 45°. Vorteilhaft ist es, wenn der Abgangswinkel β zwischen 30° und 90° beträgt, insbesondere zwischen 40° und 60° und insbesondere zwischen 42° und 50°.

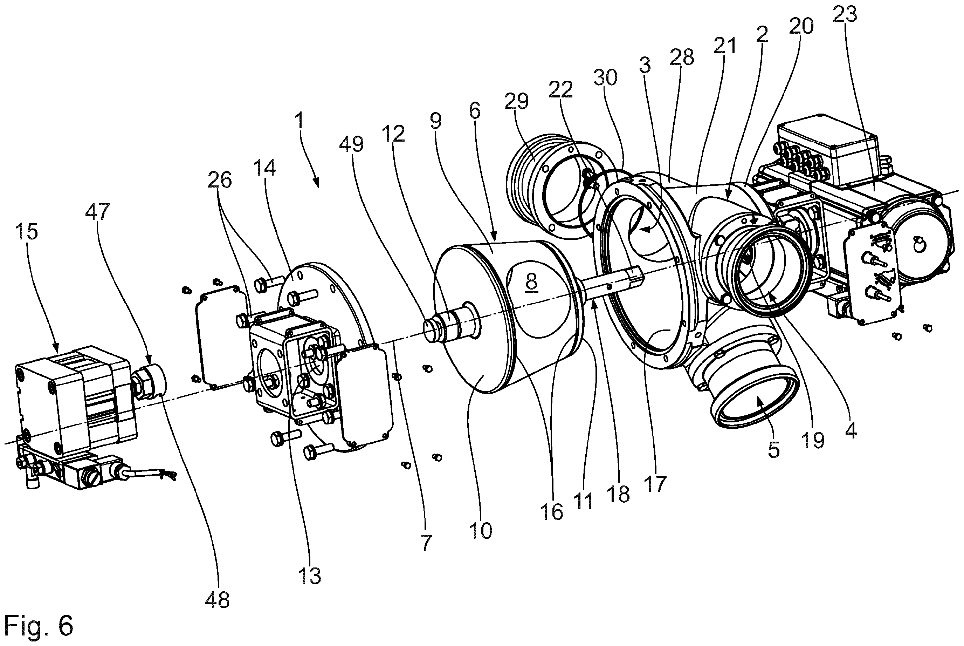

Das Drehteil 6 ist bezüglich seiner Drehachse 7 im Wesentlichen als Kegelstumpf ausgeführt, weist also entlang der Drehachse 7 zumindest abschnittsweise eine konisch ausgeführte Außenkontur 9 auf. Gemäß der Darstellung in Fig. 6 ist die Drehachse die Explosionsachse. Der Durchgangskanal 8 ist senkrecht zur Drehachse 7 orientiert. Der Durchgangskanal ist bezüglich der Drehachse 7 exzentrisch am Drehteil 6 angeordnet.

Die Kegelstumpf-Geometrie des Drehteils 6 ist durch eine größere Stirnfläche 10 und eine kleinere Stirnfläche 11 begrenzt. Die Stirnflächen 10, 11 sind gemäß dem gezeigten Ausführungsbeispiel jeweils senkrecht zur Drehachse 7 orientiert und plan ausgeführt. Die Stirnflächen 10, 11 können auch jeweils konvex geformt sein und insbesondere zumindest abschnittsweise geneigt und/oder gekrümmt ausgeführt sein.

An der größeren Stirnfläche 10 ist an dem Drehteil 6 eine Axialantriebswelle 12 befestigt. Die Axialantriebswelle 12, die durch eine erste Öffnung 13 in einem Gehäusedeckel 14 aus dem Gehäuse 2 herausgeführt ist, ist über eine Kupplung 47 mit einem Axialantrieb 15 verbunden. Der Axialantrieb 15 ist als Pneumatikantrieb, insbesondere als Pneumatikzylinder, insbesondere als Hubantrieb ausgeführt. Der Axialantrieb 15 kann auch als Elektromotor oder Hydraulikzylinder ausgeführt sein. Der Axialantrieb 15 ermöglicht eine angetriebene Axialverlagerung des Drehteils 6 im Gehäuse 2 entlang der Drehachse 7. Der Axialantrieb 15 kann mit einer Zwischenposition ausgeführt sein, die es erlaubt, das Drehteil 6 im Gehäuse 2 entlang der Drehachse 7 in eine Axial-Zwischenposition zu verlagern. In der Axial-Zwischenposition des Drehteils 6 im Gehäuse 2 kann die Weiche 1 mit einem kleinen Spalt zwischen 0,01 mm und 0,5 mm betrieben und/oder gedreht werden.

Die Kupplung 47 ermöglicht eine in Axialrichtung der Drehachse 7 gerichtete Verbindung zwischen dem Axialantrieb 15 und der Axialantriebswelle 12 zur Übertragung von Axialkräften. Bezüglich der Drehachse 7 ist die Kupplung 47 drehmomentenfrei ausgeführt. Eine Drehbewegung des Drehteils 6 wird durch die Kupplung 47 nicht auf den Axialantrieb 15 übertragen. Dazu ist die Kupplung 47 in dem gezeigten Ausführungsbeispiel hülsenförmig ausgeführt mit einem der Axialantriebswelle 12 zugewandten, radial nach innen gerichteten Ringbund 48. In axialer Richtung der Drehachse 7 hintergreift der Ringbund 48 einen Ringscheibenabschnitt 49 der Axialantriebswelle 12. Der Ringscheibenabschnitt 49 ist drehbar in dem Hülsenabschnitt der Kupplung 47 angeordnet. Der Ringscheibenabschnitt 49 ist einteilig an der Axialantriebswelle 12 angeformt und stirnseitig an der Axialantriebswelle 12 angeordnet.

An dem Drehteil 6 sind zwei Konus-Dichtungselemente 16 vorgesehen, die bezüglich der Drehachse 7 beabstandet zueinander an dem Drehteil 6 angeordnet sind. Die Konus-Dichtungselemente 16 sind gemäß dem gezeigten Ausführungsbeispiel jeweils als O-Ring ausgeführt. Die Konus-Dichtungselemente 16 dienen zur Abdichtung der Konusfläche, also der konischen Außenkontur 9 an der korrespondierenden Innenkontur 17 des Gehäuses 2.

Die Konus-Dichtungselemente 16 sind jeweils benachbart zu der größeren Stirnfläche 10 bzw. der kleineren Stirnfläche 11 angeordnet. Insbesondere ist der Durchgangskanal 8 entlang der Drehachse 7 zwischen den beiden Konus-Dichtungselementen 16 angeordnet.

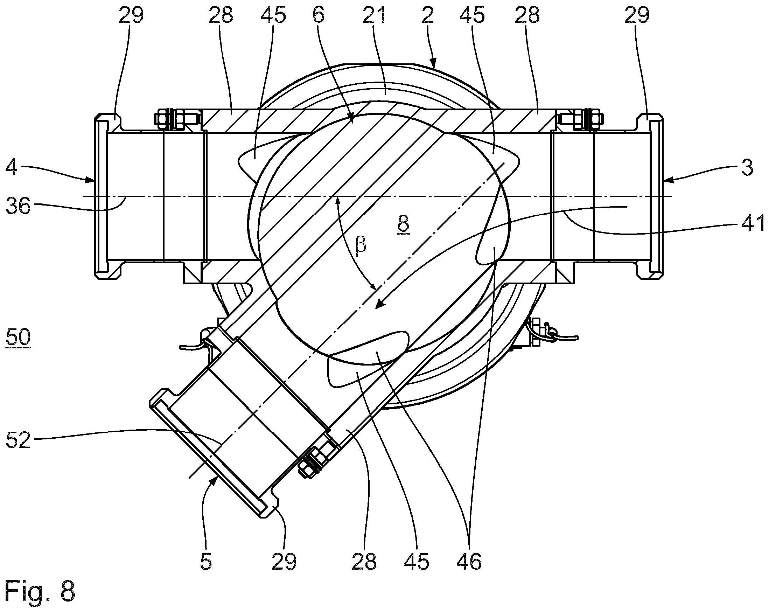

An der kleineren Stirnfläche 11 ist an dem Drehteil 6 eine Drehantriebswelle 18 befestigt, die durch eine zweite Öffnung 19 im Gehäuseboden 20, der insbesondere einteilig mit dem Gehäusegrundkörper 21 ausgeführt ist, herausgeführt werden kann. Die Drehantriebswelle 18 weist zumindest abschnittsweise entlang der Drehachse 7 einen Drehmomentübertragungsabschnitt 22 auf, der in der Ebene senkrecht zur Drehachse 7 unrund ausgeführt ist und gemäß dem gezeigten Ausführungsbeispiel eine Außen-Vierkant-Geometrie aufweist. Mit dem Drehmomentübertragungsabschnitt 22 kann die Drehantriebswelle 18 mit einem Drehantrieb 23 in drehmomentübertragenderweise gekoppelt werden. Mittels des Drehantriebs 23 kann das Drehteil 6 in dem Gehäuse 2 bezüglich der Drehachse 7 drehangetrieben werden. Der Drehantrieb 23 ist als pneumatischer Drehantrieb ausgeführt. Der Drehantrieb 23 kann auch als Elektromotor, Hydraulikmotor oder Hydraulikzylinder ausgeführt sein. Der Drehantrieb 23 ermöglicht eine Drehung des Drehteils 6 zwischen Abgangsanordnung gemäß Fig. 8 und der Durchgangsanordnung gemäß Fig. 9.

Im Gehäuse 2, insbesondere in den den Durchgangsöffnungen 3, 4, 5 zugeordneten Verbindungsstutzen 28 sind an den Innenflächen taschenförmige Vertiefungen 45 vorgesehen. Die Vertiefungen 45 wirken jeweils mit einer korrespondierenden Freiformfläche 46 im Durchgangskanal 8 des Drehteils 6 zusammen. Die taschenförmigen Vertiefungen 45 sind im Gehäuse 2 unsymmetrisch bezüglich einer Längsmittelebene 50 ausgebildet, die durch die Achsen 36, 52 der Durchgangsöffnungen 3, 4, 5 aufgespannt ist. Die Längsmittelebene 50 entspricht der Zeichnungsebene gemäß Fig. 8 und 9. Insbesondere in der Abgangsordnung gemäß der Fig. 8 aber auch in der Durchgangsanordnung gemäß Fig. 9 ist ein Übergang am Durchgangskanal 8 kantenfrei, also stoßfrei, ausgeführt. Ein geometrischer Stoß ist durch die Anpassung der Konturen in den Verbindungsstutzen 28 und im Durchgangskanal 8 vermieden. Bezüglich der Vermeidung des geometrischen Stoßes wird auf die DE 39 22 240 C2 verwiesen.

Der Gehäusedeckel 14 ist an den Gehäusegrundkörper 21 mittels mehrerer Befestigungsschrauben 26 angeschraubt. Der Gehäusedeckel 14 ist an den Gehäusegrundkörper 21 mittels einer umlaufenden Ringdichtung 27 abgedichtet angeordnet. Die Ringdichtung 27 ist eine Gehäusedeckel-Dichtung. Die Ringdichtung 27 ist vom Innenraum des Gehäuses 2 der Weiche 1 frei zugänglich ausgeführt. Die Ringdichtung 27 ist produktberührend ausgeführt. Die Ringdichtung 27 ermöglicht eine Nassreinigung des Gehäuses 2, ohne dass das Gehäuse 2 hierzu geöffnet werden muss. Die Weiche 1 kann in geschlossenem Zustand flüssig gereinigt werden. Die Weiche 1 ermöglicht eine Flüssigreinigung unter Cleaning in Place-Hygiene-Ansprüchen.

Bezüglich der Drehachse 7 ist die Außenkontur 9 des Drehteils 6 mit dem Konuswinkel κ ausgeführt. Der Konuswinkel κ beträgt gemäß dem gezeigten Ausführungsbeispiel 20°. Vorteilhaft ist es, wenn der Konuswinkel κ zwischen 5° und 80°, insbesondere zwischen 10° und 40°, insbesondere zwischen 15° und 25° beträgt.

Für einen vereinfachten und verbesserten Anschluss von Förderleitungen an das Gehäuse 2 sind an den Durchgangsöffnungen 3, 4, 5 jeweils einteilig am Gehäusegrundkörper 21 angeformte Verbindungsstutzen 28 ausgeführt. An die Verbindungsstutzen 28 kann jeweils vorteilhaft ein Rohrstutzen 29 abgedichtet mittels einer produktberührenden Flanschdichtung 30 angeflanscht werden. Durch die Rohrstutzen 29 wird eine standardisierte Verbindungsschnittstelle bereitgestellt, um die Weiche 1 in eine Förderanlage zu integrieren. Die Rohrstutzen 29 können unkompliziert am Gehäuseangeschraubt werden. Dadurch ist es möglich, die Weiche 1 durch geeignete Auswahl der Rohrstutzen 29 an den erforderlichen Rohrquerschnitt einer Förderanlage anzupassen. Die Weiche kann flexibel und unkompliziert in eine bestehende Förderanlage integriert werden.

Nachfolgend wird die Funktion der Weiche 1 mit Spaltdichtung näher erläutert.

Für die Förderung eines Förderguts entlang der Durchgangsrichtung 42 oder der Abgangsrichtung 41 wird das Drehteil 6 zunächst abgedichtet in dem Gehäuse 2 angeordnet. Für eine abgedichtete Anordnung des Drehteils 6 im Gehäuse 2 wird das Drehteil 6 mittels des Axialantriebs 15 entlang der Drehachse 7 in das Gehäuse 2 gedrückt, bis das Drehteil 6 mit einem definierten Radialspalt zwischen der Außenkontur 9 und der Innenkontur 17 im Gehäuse 2 angeordnet ist. Der Radialspalt beträgt insbesondere zwischen 0,01 mm und 0,5 mm, insbesondere zwischen 0,02 mm und 0,3 mm, insbesondere zwischen 0,03 mm und 0,2 mm, und insbesondere zwischen 0,05 mm und 0,1 mm.

In dieser Anordnung ist das Drehteil 6 mittels der Konus-Dichtungselemente 16 im Gehäuse 2 abgedichtet. Das Drehteil 6 befindet sich in einer Förderposition, die auch als Förderanordnung bezeichnet ist. Eine Materialförderung über die miteinander verbundenen Durchgangsöffnungen 3, 5 bzw. 4, 5 entlang des Durchgangskanals 8 ist abgedichtet möglich. Für eine Änderung des Materialförderwegs von der Durchgangsrichtung 42 auf die Abgangsrichtung 41 oder umgekehrt wird das Drehteil 6 mittels des Drehantriebs 23 um die Drehachse 7 gedreht. Die Drehung des Drehteils 6 und der Drehachse 7 kann in der Förderanordnung des Drehteils 6 im Gehäuse 2 erfolgen. Das Drehteil 6 ist in der abgedichteten Anordnung im Gehäuse 2 um die Drehachse 7 drehbar. Um die Drehung des Drehteils 6 zu vereinfachen, kann vor der Drehbewegung das Drehteil 6 entlang der Drehachse 7 in dem Gehäuse 2 aus der abgedichteten Anordnung gezogen werden, also zum Axialantrieb 15 hin verlagert werden.

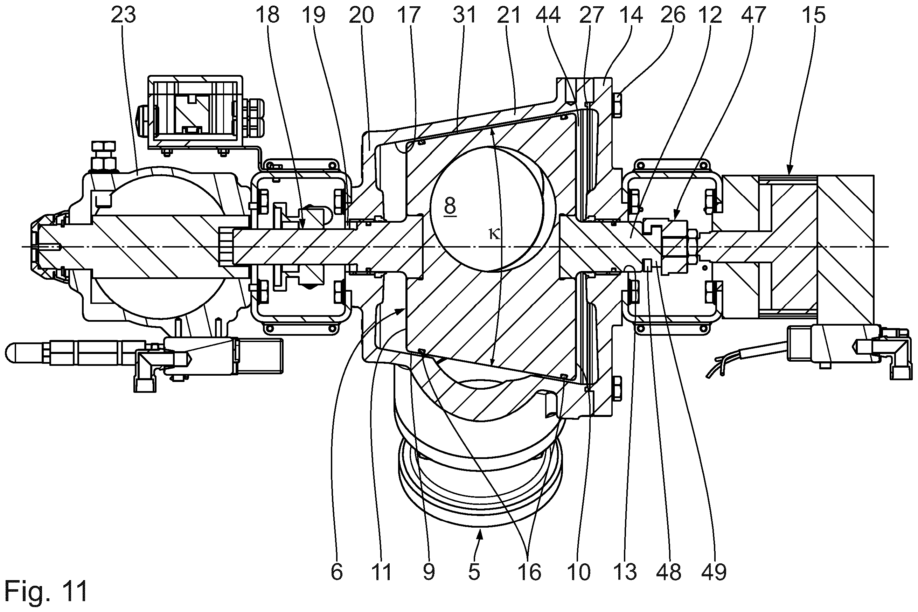

Für eine Reinigung der Weiche 1 erfolgt insbesondere zunächst ein Spülen des Durchgangskanals 8 über die mit der Weiche 1 verbundenen Förderleitungen in Durchgangsrichtung 42 und in Abgangsrichtung 41, wobei das Drehteil 6 insbesondere in der Förderposition verbleibt. Anschließend wird das Drehteil 6 axial entlang der Drehachse 7 in dem Gehäuse 2 zu dem Gehäusedeckel 14 hinverlagert. Die Spülanordnung der Weiche 1 ist in Fig. 11 gezeigt. Dazu weist das Gehäuse 2 einen Freiraum 44 auf, in den das Drehteil 6 mit der größeren Stirnfläche 10 hineinverlagert werden kann. Während der Axialverlagerung des Drehteils 6 bleibt das Gehäuse 2 geschlossen. Für die Reinigung der Weiche 1, insbesondere für das Umspülen des Drehteils 6 und der Innenflächen des Gehäusegrundkörpers 20 und des Gehäusedeckels 14, ist ein Öffnen des Gehäuses 2 nicht erforderlich.

Durch diese Axialverlagerung wird der Radialspalt zwischen der Außenkontur 9 und der Innenkontur 17 vergrößert. In der Reinigungsanordnung beziehungsweise Spülanordnung der Weiche 1 gemäß Fig. 11 weist der Reinigungsspalt 31 eine Größe von etwa 1,5 mm bis 2,0 mm auf. Vorteilhaft ist es, wenn der Reinigungsspalt 31 eine Größe von 0,5 mm bis 4 mm, insbesondere zwischen 1,0 mm bis 3,0 mm, aufweist.

Der Reinigungsspalt 31 wird auch als Spülspalt bezeichnet. Der Reinigungsspalt 31 ermöglicht es, dass Reinigungsflüssigkeit, die beispielsweise über die Durchgangsöffnungen 3, 4, 5 in das Gehäuse 2 zugeführt wird, auch die Flächenabschnitte der Außenkontur 9 des Drehteils 6, der Innenkontur 17 des Gehäuses 2 und die Innenfläche des Gehäusedeckels 14 mit Reinigungsflüssigkeit benetzt. Der gesamte Innenraum des Gehäuses 2, insbesondere der Spalt zwischen der Außenkontur 9 und der Innenkontur 17, kann mit Reinigungsflüssigkeit gespült werden. Die Reinigungsanordnung gemäß Fig. 11 wird auch als Spülanordnung bezeichnet. Dadurch ist es möglich, Ablagerungen und unbeabsichtigte Verunreinigungen in der Weiche zu entfernen.

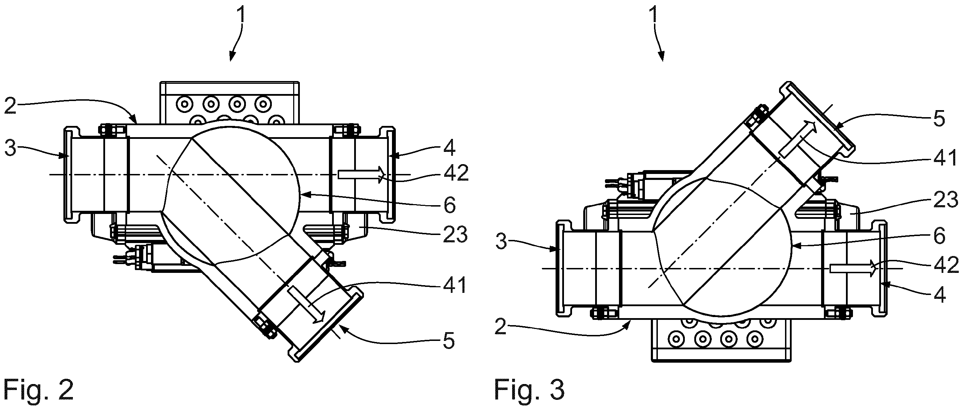

Fig. 11 zeigt die Weiche 1 in einer Einbauposition, bei der der Gehäusedeckel 14 vertikal orientiert ist. In der in Fig. 11 gezeigten Anordnung ist die Durchgangsrichtung 42 horizontal orientiert. Die Abgangsrichtung 41 ist nach schräg unten gerichtet. Die Förderebene ist vertikal orientiert. Diese Anordnung ist schematisch in Fig. 2 gezeigt.

Grundsätzlich möglich ist auch eine Einbauposition mit horizontaler Durchgangsrichtung 42 und einer Abgangsrichtung 41 schräg nach oben wie in Fig. 3. Auch in dieser Anordnung ist die Förderebene vertikal orientiert. Entsprechend ist der Gehäusedeckel 14 vertikal orientiert.

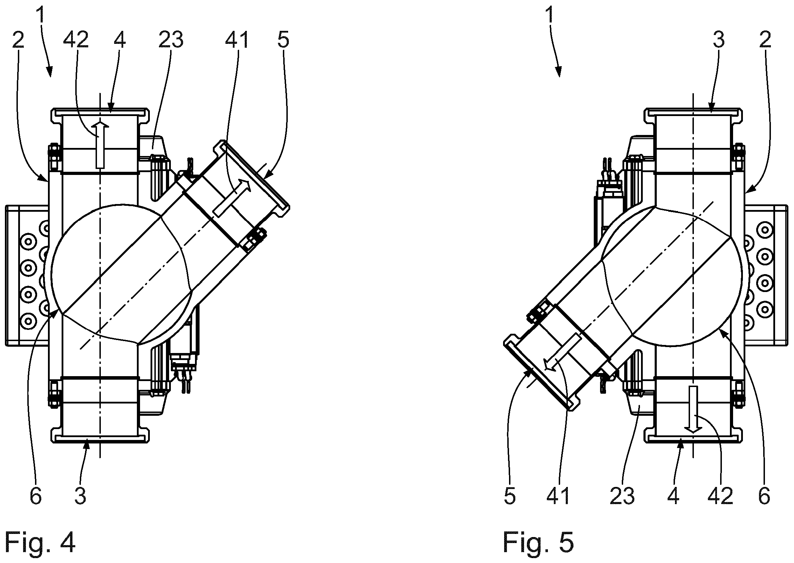

Es ist auch eine Einbausituation möglich, bei der die Durchgangsrichtung 42 vertikal orientiert ist mit einer Abgangsrichtung 41 nach schräg oben (vgl. Fig. 4) oder nach schräg unten (vgl. Fig. 5). In beiden Fällen ist die Förderebene vertikal orientiert. In beiden Fällen ist der Gehäusedeckel 14 vertikal orientiert. Die zuvor beschriebenen Einbaulagen sind die bevorzugten Einbaulagen der Weiche. In diesen Einbaulagen bleibt nur eine kleine Menge Spülflüssigkeit übrig. Diese Einbaulagen sind bevorzugt.

Die Weiche kann auch eingesetzt werden, wenn der Gehäusedeckel 14 horizontal orientiert ist. Vorteilhaft ist es, wenn der Gehäusedeckel 14 in horizontaler Einbaulage an der Oberseite des Gehäuses 2 angeordnet ist. Die Entnahme des Drehteils 6, insbesondere zu Wartungs- und/oder Reinigungszwecken ist vereinfacht. Grundsätzlich denkbar ist auch die Anordnung, bei der der Gehäusedeckel 14 horizontal orientiert und an der Unterseite des Gehäuses 2 angeordnet ist. Hier bleibt eine größere Menge Spülflüssigkeit in der Weiche. Diese beiden Einbaulagen erfordern eine längere und intensivere Trocknung der Weiche.

Bei der erfindungsgemäßen Weiche sind die Einbaulage und die Art der Dichtung des Drehteils 6 im Gehäuse 2 voneinander unabhängig. Jede mögliche Dichtungsart des Drehteils gegenüber dem Gehäuse kann in jeder Einbaulage verwendet werden.

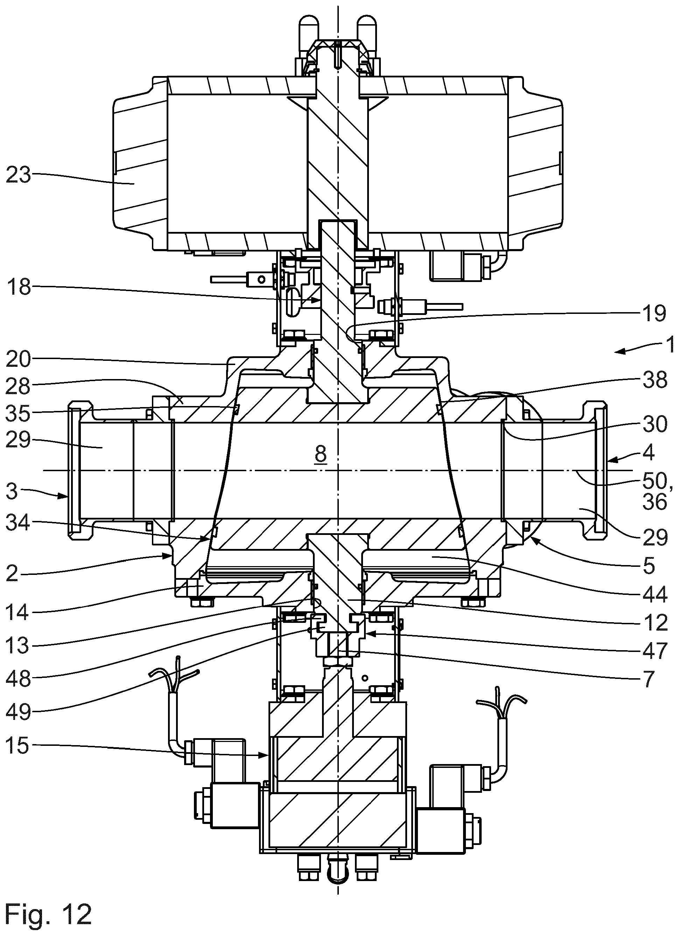

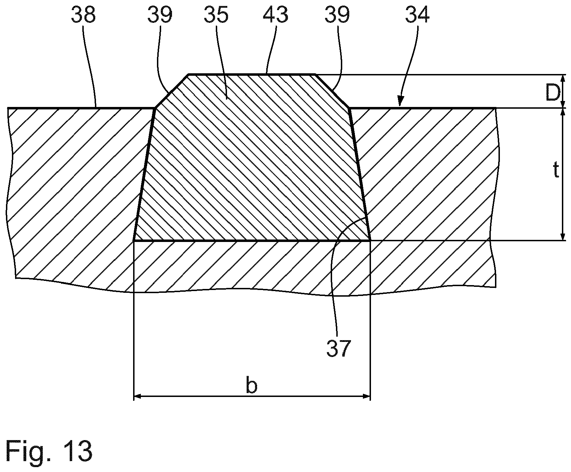

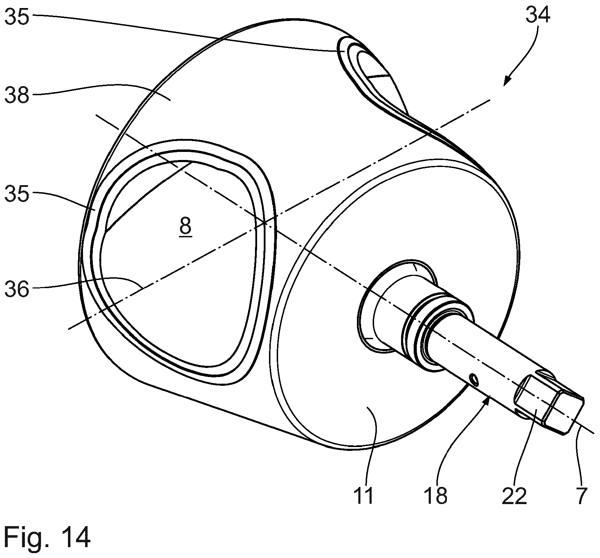

Nachfolgend werden anhand der Fig. 12 bis 14 Aufbau und Funktion der Weiche 1 mit einer Dichtung am Durchgangskanal 8 näher erläutert.

Bei dieser weiteren Ausführungsform der Weiche 1 weisen an dem Drehteil 34 die im Wesentlichen ringförmigen Öffnungen des Durchgangskanals 8 jeweils ein umlaufendes Durchgangskanal-Dichtungselement 35 auf. Bezüglich der Durchgangskanal-Längsachse 36 sind die Durchgangskanal-Dichtungselemente 35 umlaufend an der Außenkontur 9 des Drehteils 34 angeordnet. Die Anordnung und insbesondere die Positionierung des Drehteils 34 in dem Gehäuse 2 sind im Übrigen im Wesentlichen unverändert. Ein wesentlicher Unterschied gegenüber der vorherigen Ausführungsform besteht darin, dass der Dichtspalt zwischen der Außenkontur 9 des Drehteils 34 und der Innenkontur 17 des Gehäuses 2 vergrößert ist. Der Radialspalt beträgt insbesondere zwischen 0,1 mm und 2,0 mm, insbesondere zwischen 0,2 mm und 2,0 mm, insbesondere zwischen 0,3 mm und 1,2 mm und insbesondere zwischen 0,4 mm und 0,8 mm. Vorteilhaft ist es, wenn der Radialspalt zwischen der konischen Außenkontur 9 des Drehteils 34 und der Innenkontur 17 des Gehäuses 2 mit möglichst geringem Spaltraum ausgeführt ist. Um das Drehen des Drehteils 34 sicherzustellen, kann das Drehteil 34 axial entlang der Längsachse 7 aus dem Gehäuse 2 zumindest bereichsweise gezogen werden. Bevorzugt ist es, wenn das Drehteil 34 mit einem engen Radialspalt in dem Gehäuse 2 gedreht wird.

Wie bei der vorherigen Ausführungsform der Spaltdichtung ist das Drehteil 34 mit den Durchgangskanal-Dichtungselementen 35 in dem Gehäuse 2 drehbar angeordnet. Für eine Drehbarkeit des Drehteils 34 um die Drehachse 7 ist es nicht erforderlich, das Drehteil 34 in dem Gehäuse 2 axial zu verlagern.

Besonders an der Ausführung des Durchgangskanal-Dichtungselements 35 ist, dass die umlaufende Dichtungsnut 37 im Wesentlichen schwalbenschwanzförmig ausgeführt ist, also die Nutbreite b mit steigender Nuttiefe t zunimmt. In Tiefenrichtung wächst die Nutbreite b zumindest in einer Breitenrichtung. Dadurch wird das Durchgangskanal-Dichtungselement 35 zuverlässig in der Nut 37 gehalten. Insbesondere ist die Nutbreite im Bereich der Oberfläche 38 des Drehteils 34 kleiner als die Breite des Durchgangskanal-Dichtungselements 35 in einem Ausgangszustand. Das Durchgangskanal-Dichtungselement 35 ist in der Nut 37 an der Oberfläche 38 vorgespannt und in Nutbreitenrichtung geklemmt angeordnet.

Um den Halt des Durchgangskanal-Dichtungselements 35 in der Nut 37 zu verbessern, kann die Breite des Durchgangskanal-Dichtungselements mit zunehmender Nuttiefe t ebenfalls zunehmen. Die Kontur des Abschnitts des Durchgangskanal-Dichtungselements 35, der innerhalb der Nut 37 angeordnet ist, ist im Wesentlichen ebenfalls schwalbenschwanzförmig ausgeführt, wobei zumindest insbesondere in einer Richtung die Breite zunimmt. Insbesondere ist die Kontur des in der Nut 37 angeordneten Abschnitts des Durchgangskanal-Dichtungselements 35 im Wesentlichen identisch zu dem Nutquerschnitt ausgeführt. Die maximale Breite des Durchgangskanal-Dichtungselements 35 ist insbesondere größer als die der Oberfläche 38 des Drehteils 34 zugewandte Öffnung der Nut 37. Das Durchgangskanal-Dichtungselement ist aus einem Elastomermaterial hergestellt.

Das Durchgangskanal-Dichtungselement 35 ragt gemäß dem gezeigten Ausführungsbeispiel an der Oberfläche 38 des Drehteils 34 aus der Nut 37 hervor. Dadurch ist eine Dichtwirkung des Durchgangskanal-Dichtungselements 35 verbessert. Der Überstand D gegenüber der Oberfläche 38 beträgt gemäß dem gezeigten Ausführungsbeispiel insbesondere zwischen 0,5 mm und 1,0 mm. Die Querschnittsform des Durchgangskanal-Dichtungselements 35 ist im Wesentlichen rechteckförmig, wobei der Überstandsabschnitt des Durchgangskanal-Dichtungselements 35, der aus der Nut 37 vorragt, seitliche Übergangsfasen 39 aufweist. Die Übergangsfasen 39 verbessern die Dichtwirkung am Drehteil 34. Die Übergangsfasen 39 ermöglichen einen stetigen Übergang von der Oberfläche 38 des Drehteils 34 zu der Oberfläche 43 des Durchgangskanal-Dichtungselements 35.

Um die Weiche 1 mit Durchgangskanal-Dichtungselementen 35 zu spülen, wird das Drehteil 34 wie bei der vorherigen Ausführungsform dem Gehäuse 2 axial verlagert, bis der Spülspalt vorliegt. Da die Durchgangskanal-Dichtungselemente 35 an der Außenkontur 9 des Drehteils 34 überstehen, ist bei dieser Ausführungsform der Spülspalt als Abstand zwischen der Innenkontur 17 des Gehäuses 2 und den Durchgangskanal-Dichtungselementen 35 festgelegt. Der so definierte Spülspalt ist für diese Ausführungsform identisch mit dem Spülspalt der Weiche 1 mit Spaltdichtung.

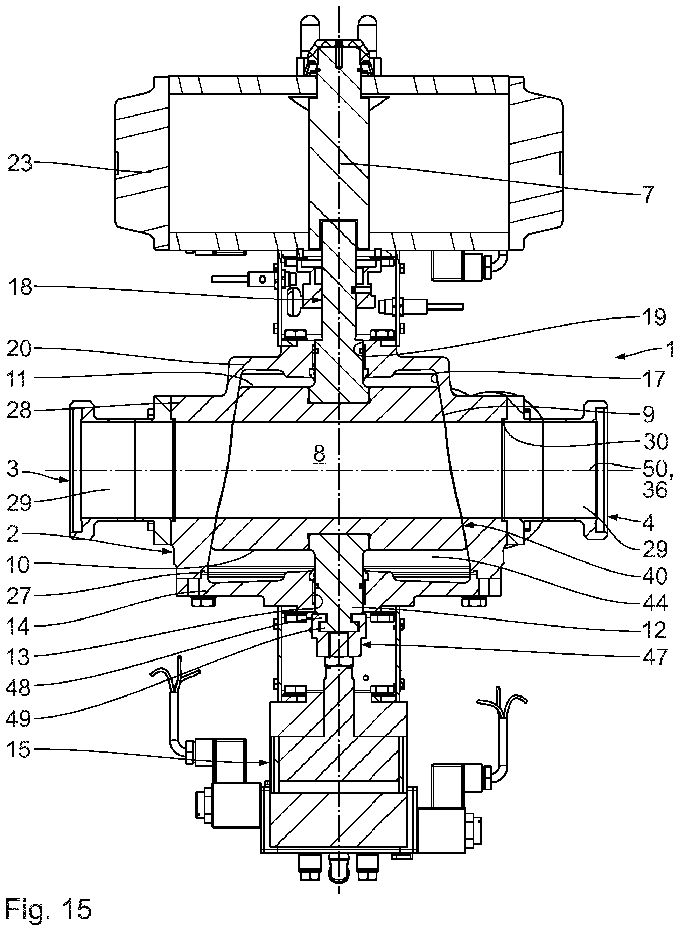

Nachfolgend werden anhand von Fig. 15 Aufbau und Funktion einer weiteren Ausführungsform einer Weiche ohne Radialspalt erläutert.

Bei dieser Ausführungsform der Weiche 1 ist das Drehteil 40 ohne Dichtungselement gemäß dem gezeigten Ausführungsbeispiel ausgeführt. Eine Abdichtung des Drehteils 40 im Gehäuse 2 wird dadurch erreicht, dass das Drehteil 40 mit der konischen Außenkontur 9 unmittelbar an der konischen Innenkontur 17 des Gehäuses 2 anliegt. Man spricht davon, dass das Drehteil 40 gegenüber dem Gehäuse 2 auf Block gesetzt ist. In dieser Anordnung ist kein Radialspalt vorgesehen bzw. der Radialspalt beträgt 0 mm. Für diese Ausführungsform ist es vorteilhaft, wenn zumindest eine der aneinander anliegenden Oberflächen eine bestimmte Oberflächenbehandlung aufweist und insbesondere eine Oberflächenveredelung aufweist, insbesondere eine besondere Oberflächenhärte aufweist. Es ist auch möglich, die Oberflächen beider Komponenten, also des Gehäuses 2 und des Drehteils 40 mit einer härtenden Schicht zu versehen. Vorteilhaft ist es, wenn die Oberflächen eine Chromschicht als Härteschichtaufweisen. Vorteilhaft ist es, wenn nur die Oberfläche des Drehteils 40 mit der Chromschicht ausgeführt ist.

Es ist denkbar, zusätzlich zu der Anordnung auf Block an der Außenkontur des Drehteils 40 ein Konus-Dichtungselement 16 in Form eines O-Rings vorzusehen.

Zum Drehen der Weiche, bei der das Drehteil 40 in dem Gehäuse auf Block gesetzt ist, ist es erforderlich, das Drehteil 40 von dem Gehäuse 2 zu entfernen. Dies kann beispielsweise durch eine vergleichsweise geringe Axialverstellung von wenigen zehntel Millimetern bis zu einigen Millimetern erfolgen. Die geringe Axialverstellung des Drehteils 40 kann dadurch erfolgen, dass der pneumatische Hubantrieb, also der Axialantrieb 15, drucklos geschaltet wird. Mittels einer nicht dargestellten Tellerfeder, die vorgespannt eingebaut ist, wird das Drehteil 40 von der Konus-Innenkontur 17 des Gehäuses 2 abgehoben.

In der abgehobenen Anordnung des Drehteils 40 kann dieses beispielsweise zwischen der Durchgangsanordnung und der Abgangsanordnung gedreht werden.

In dieser Anordnung kann das Drehteil 40 aber auch um die Drehachse 7 gedreht werden, um mögliche Produktablagerungen abzukratzen und auszutragen. Für das eigentliche Spülen wird das Drehteil 40 weiter entlang der Drehachse 7 aus dem Gehäuse 2 herausgezogen, bis ein größerer, definierter Spülspalt gebildet ist.

Eine weitere Axialverstellung erfolgt durch den Axialantrieb 15, in dem dieser aktiviert, also betätigt, wird.

Anstelle der vorgespannten Tellerfeder ist es auch möglich, zwei hintereinander geschaltete Pneumatikzylinder als Axialantrieb 15 einzusetzen.

Das Axialverlagern des Drehteils 40 kann auch einstufig erfolgen, wobei insbesondere auf ein Entlastungselement bei Drucklosschalten des Axialantriebs 15 verzichtet wird. Das Drehen und Reinigen des Drehteils 40 erfolgt dann in einem maximal axial verlagerten Zustand, also in der Spülanordnung.

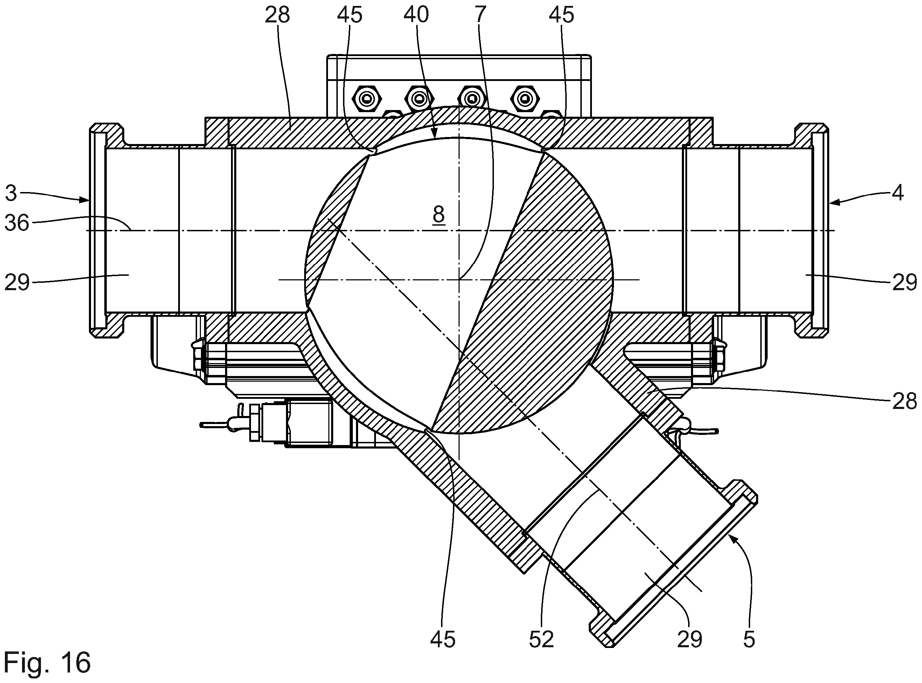

Nachfolgend wird anhand von Fig. 16 die Funktion, insbesondere das Spülen einer Weiche näher erläutert. Gemäß Fig. 16 befindet sich das Drehteil 40 in dem axialverlagerten Zustand. Zusätzlich ist das Drehteil 40 um die Längsachse 7 gedreht, befindet sich also weder in der Durchgangsanordnung noch in der Abgangsanordnung, sondern in einer Spül-Drehposition, in der der Durchgangskanal 8 keiner der Durchgangsöffnungen 3, 4, 5 zugewandt ist. Insbesondere ist die erste Durchgangsöffnung 3 und der damit verbundene Rohrleitungsabschnitt durch das Drehteil 40 weitgehend blockiert. Spülwasser, das aufgrund der Spalte zwischen Drehteil und Gehäuse in den Seitendeckelbereich gedrückt wird, durchströmt diesen Seitendeckelbereich intensiv. Das Spülwasser wird anschließend durch weitere Spalte in eine der abführenden Rohrleitungsabschnitte gespült, die mit den Durchgangsöffnungen 4 und/oder 5 verbunden sind. Vorteilhaft ist es, dass der Drehantrieb 23 der Weiche 1 die Spülposition des Drehteils 40 mit einer dritten Mittelposition ermöglicht.

Mit dem Wechsel der Position des Drehteils während des Spülvorgangs wird die Reinigungsflüssigkeit in alle Bereiche des Gehäuses gespült. Damit kann entsprechend alle Verunreinigung oder altes Produkt entfernt werden.

Zum Trocknen der Weiche, insbesondere des Drehteils 40, kann der Drehantrieb 23 in die in Fig. 16 gezeigte Mittelposition gefahren werden. Um den Trocknungsvorgang zu beschleunigen, kann das Drehteil ebenfalls axial bewegt werden, damit genügend Turbulenz der Strömung erzeugt wird, und insbesondere um alle Bereiche der Weiche 1 und der des Drehteils 40 sicher abzutrocknen und größere Mengen des Spülwassers aus möglichen Totzonen zu entfernen. Die Luftgeschwindigkeit muss in der Weiche so groß gewählt werden, da Wasser weggeblasen wird. Diese Luftgeschwindigkeit beträgt zwischen 15 m/s und 40 m/s, bevorzugt zwischen 25 m/s und 30 m/s in der Rohrleitung. In Spalten stellen dich dann entsprechend höhere Luftgeschwindigkeiten ein, die sicher jede Wasser mitnehmen und schnell abtrocknen.

Es ist denkbar, dass der Gehäuseboden 20 plan ausgeführt ist. Es ist denkbar, dass in dem Gehäuseboden 20 eine Sammelrinne integriert ist, die gemäß der Schnittansicht in Fig. 15 im Wesentlichen v- oder u-förmig ausgeführt ist. Die Form des Gehäusebodens 20 hängt insbesondere von der Einbaulage der Weiche 1 ab.

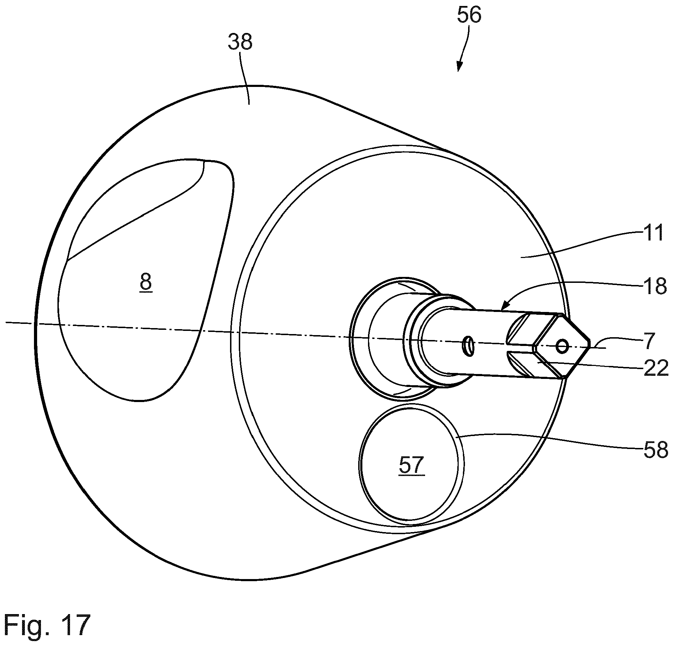

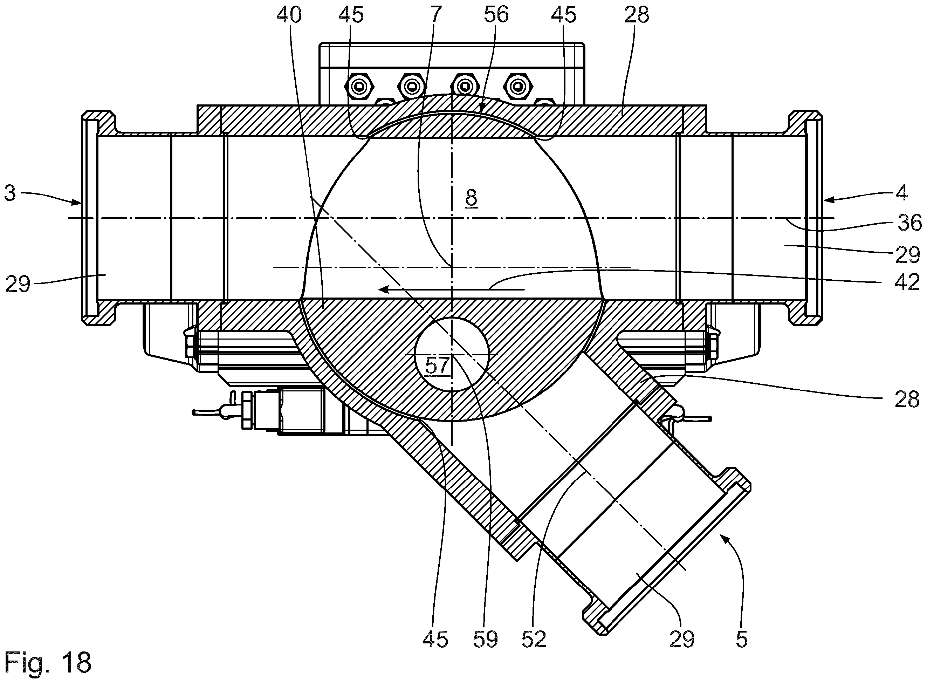

Nachfolgend wird anhand von Fig. 17 und 18 eine weitere Ausführungsform einer Weiche erläutert.

Das Drehteil 56 entspricht im Wesentlichen dem Drehteil 40 gemäß der vorherigen Ausführungsform, wobei zusätzlich ein Durchbruch 57 vorgesehen ist. Der Durchbruch 57 ist im Wesentlichen zylinderförmig ausgeführt und weist an den den Stirnflächen 10, 11 des Drehteils 56 zugewandten Übergängen Abfasungen 58 auf Der Durchbruch 57 weist eine DurchbruchLängsachse 59 auf, die parallel zu Längsachse 7 der Weiche 53 orientiert ist. Der Durchbruch 57 führt zu einer Reduzierung der Masse des Drehteils. Zudem ist die Spülung der Weiche 53, insbesondere im Bereich der Seitenflächen verbessert. Wesentlich ist, dass sich der Durchbruch 57 von zumindest einer der Stirnseiten 10, 11 des Drehteils 56 aus erstreckt. Es ist auch denkbar, anstelle des Durchbruchs eine sacklochartige Ausnehmung vorzusehen, die sich entlang der Durchbruchlängsachse 59 erstreckt, aber nicht durchgängig durch das Drehteil 56 ausgeführt ist.

Die Durchbruchlängsachse 59 kann gegenüber der Längsachse 7 mit einem Neigungswinkel angeordnet sein. Dieser Neigungswinkel kann bis zu 20° betragen.

Die Durchbruchlängsachse 59 ist insbesondere senkrecht zur Durchgangskanal-Längsachse 36 orientiert. Die Durchgangskanal-Längsachse 36 und die Durchbruchlängsachse 59 sind derart windschief zueinander orientiert, dass der Durchgangskanal 8 und der Durchbruch 57 voneinander getrennt in dem Drehteil 56 verlaufen. Der Durchbruch 57 ist beabstandet von dem Durchgangskanal 8 im Drehteil 56 integriert. Der Durchgangskanal 8 und der Durchbruch 57 sind nicht miteinander verbunden. Der Durchbruch 57 ist eine Entlastungsbohrung.

Während des Reinigens der Weiche 53 mit einer Flüssigkeit ermöglicht der Durchbruch 57 eine Verbesserung des Reinigungsergebnisses. Sobald Flüssigkeit, insbesondere Wasser über eine der seitlichen Ablauföffnungen des Durchbruchs 57 austritt, werden die Stirnseiten des Drehteils 56 besser umspült.

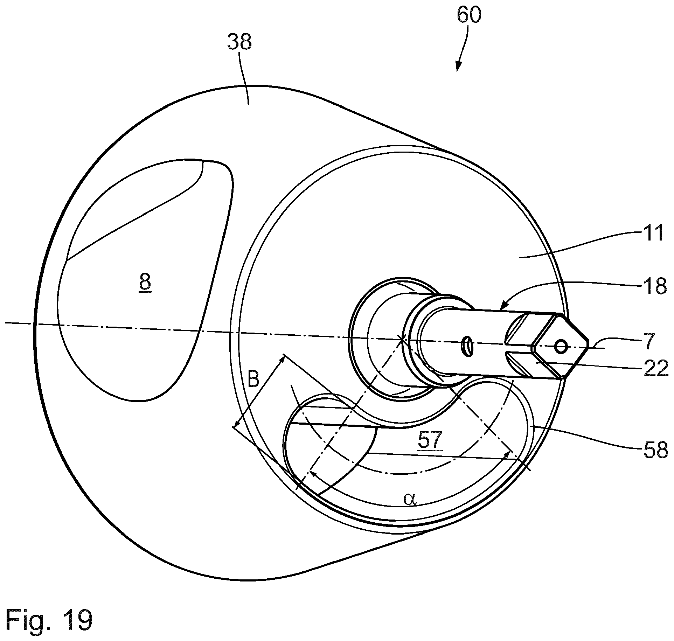

Nachfolgend wird anhand von Fig. 19 eine weitere Ausführungsform eines Drehteils 60 erläutert. Das Drehteil 60 entspricht im Wesentlichen dem Drehteil 56, wobei der Durchbruch 57 langlochförmig entlang eines Kreisbogens ausgeführt ist. Der Öffnungswinkel α des Kreisbogens bezüglich der Längsachse 7 beträgt gemäß dem gezeigten Ausführungsbeispiel 90°. Der Öffnungswinkel α kann auch mehr als 90° oder weniger als 90° betragen. Die Langlochbreite B beträgt dem gezeigten Ausführungsbeispiel die Hälfte des Radius der kleineren Stirnfläche 11. Die Langlochbreite B kann größer oder kleiner gewählt werden. Vorteilhaft ist es, wenn der Durchbruch 57 möglichst groß ist, um möglichst viel Masse des Drehteils 60 zu reduzieren. Bei der Ausgestaltung des Durchbruchs 57 ist zu berücksichtigen, dass sich der Durchbruch 57 und der Durchgangskanal 8 nicht schneiden. Die Stabilität und Steifigkeit des Drehteils 60 ist trotz des Durchbruchs 57 gewährleistet.

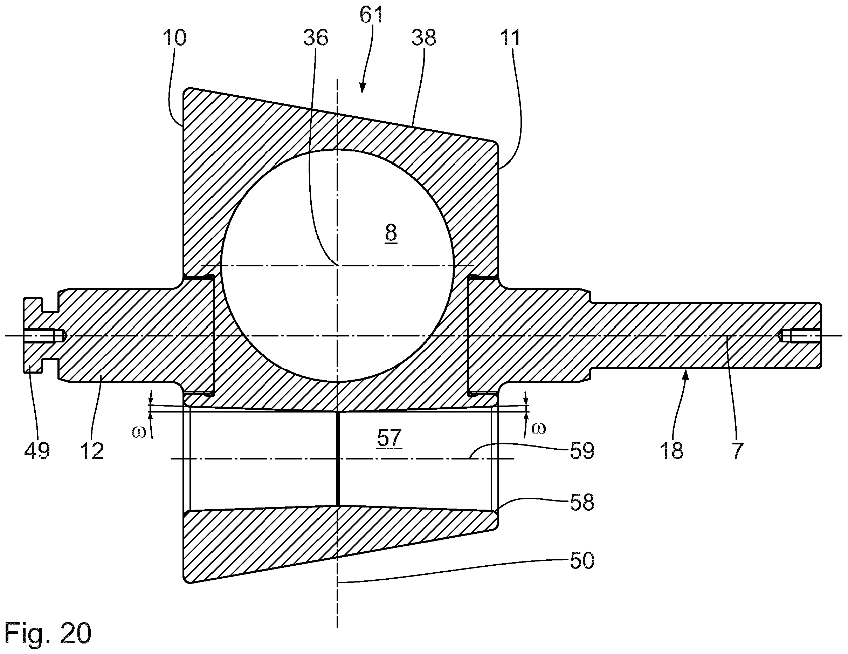

Nachfolgend wird anhand von Fig. 20 eine weitere Ausführungsform eines Drehteils 61 erläutert.

Das Drehteil 61 entspricht im Wesentlichen dem Drehteil 56 gemäß dem vorherigen Ausführungsbeispiel. Der wesentliche Unterschied besteht darin, dass der Durchbruch 57 doppeltkonisch ausgeführt ist. Jeweils ausgehend von den an den Stirnflächen 10, 11 angeordneten Öffnungen verjüngt sich der Durchbruch 57 mit einem Durchbruch-Konuswinkel ω. Gemäß dem gezeigten Ausführungsbeispiel beträgt der Durchbruch-Konuswinkel ω 1°. Der Durchbruch-Konuswinkel ω kann aber auch größer oder kleiner als 1° gewählt werden. Vorteilhaft ist es, wenn der Durchbruch-Konuswinkel ω im Durchbruch 57 ein selbsttätiges Ablaufen von Reinigungsflüssigkeit aus dem Durchbruch zu den Stirnflächen 10, 11 hin begünstigt.

Die doppeltkonische Ausführung des Durchbruchs 57 ist symmetrisch. Das bedeutet, dass sich die Konusabschnitte des Durchbruchs 57 in der Längsmittenebene 50 treffen, in der auch die Durchgangskanal-Längsachse 36 liegt. Insbesondere sind die beiden Durchbruch-Konuswinkel ω der Konusabschnitte des Durchbruchs 57 identisch. Es ist auch denkbar, dass die Tiefe der Konusabschnitte des Durchbruchs 57 voneinander verschieden sind und sich insbesondere außerhalb der Längsmittenebene 50 treffen. Die Durchbruch-Konuswinkel ω können auch unterschiedlich festgelegt sein.

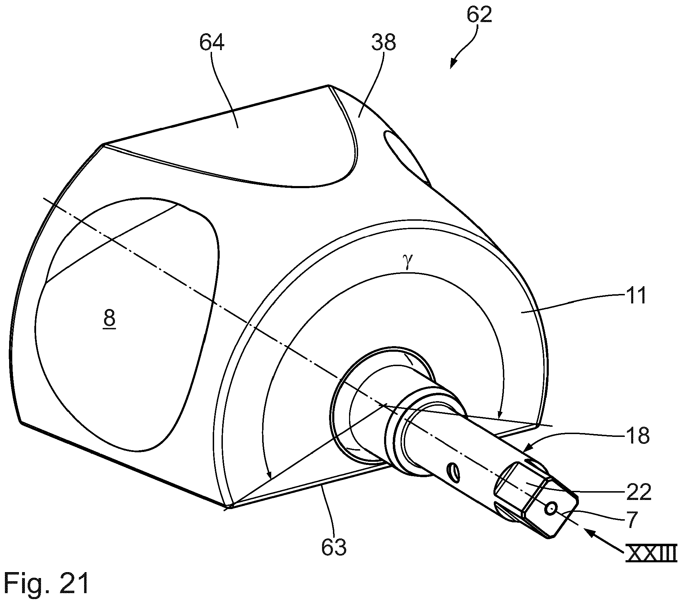

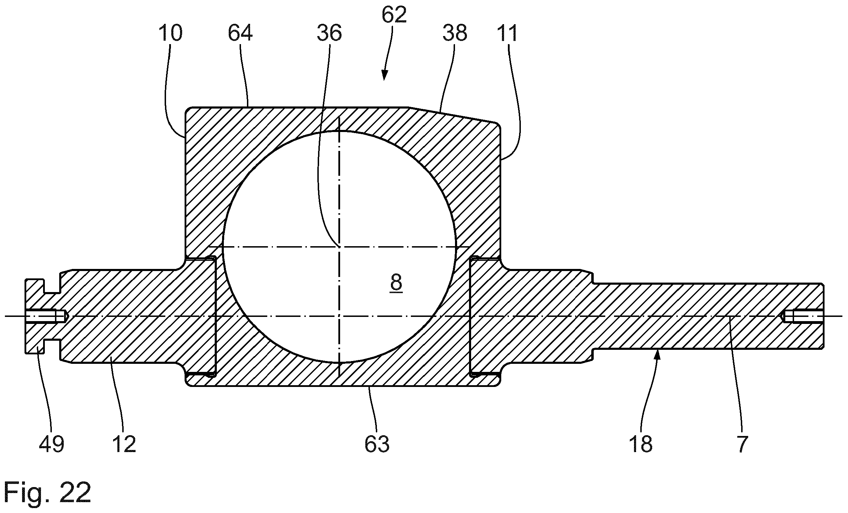

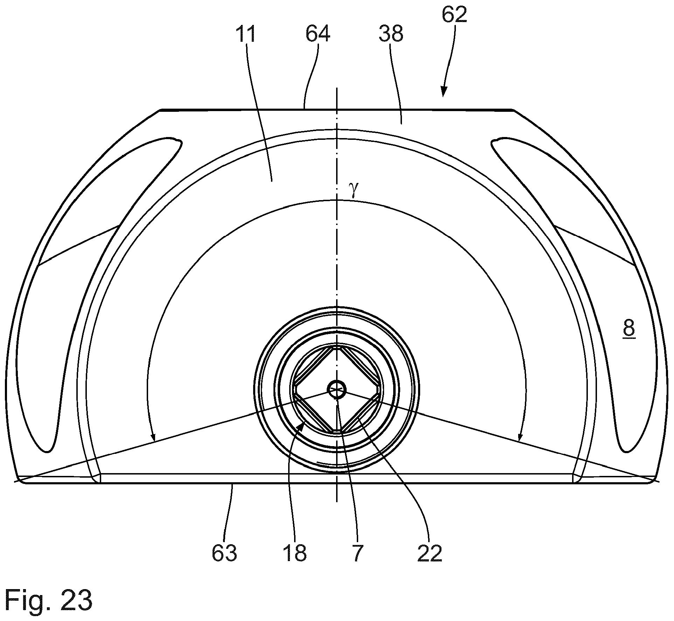

Nachfolgend wird anhand von Fig. 21 bis 23 eine weitere Ausführungsform eines Drehteils 62 erläutert. Der wesentliche Unterschied gegenüber den vorherigen Ausführungsformen besteht darin, dass die Außenkontur 9 des Drehteils 62 nicht vollumfänglich konisch ausgeführt ist. Die Außenkontur erstreckt sich über einen Öffhungswinkel c bezüglich der Längsachse 7, wobei der Öffnungswinkel γ mehr als 180° beträgt. Gemäß dem gezeigten Ausführungsbeispiel beträgt der Öffnungswinkel γ 200°.

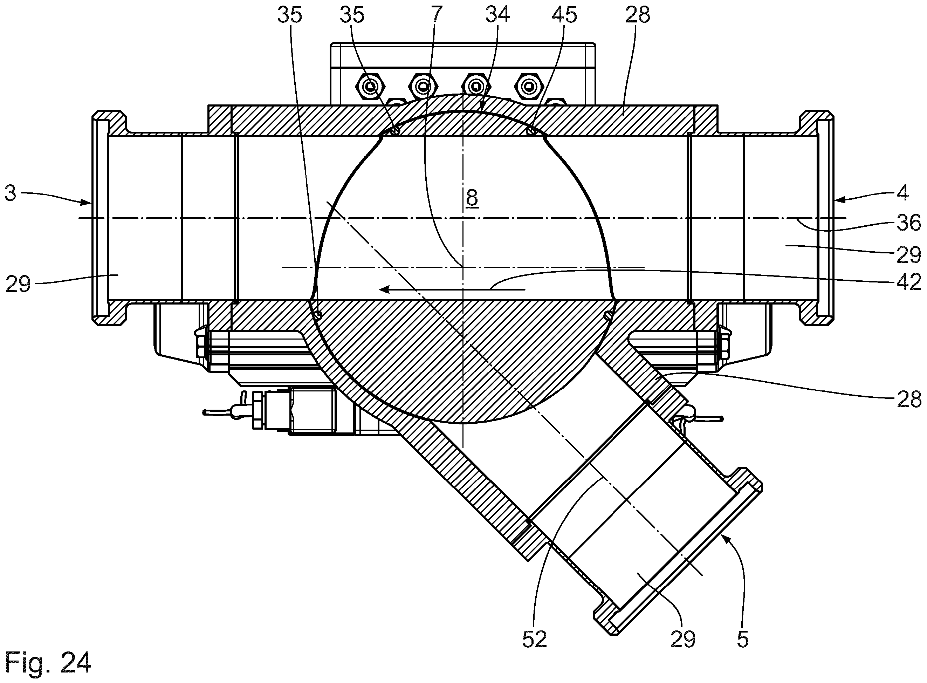

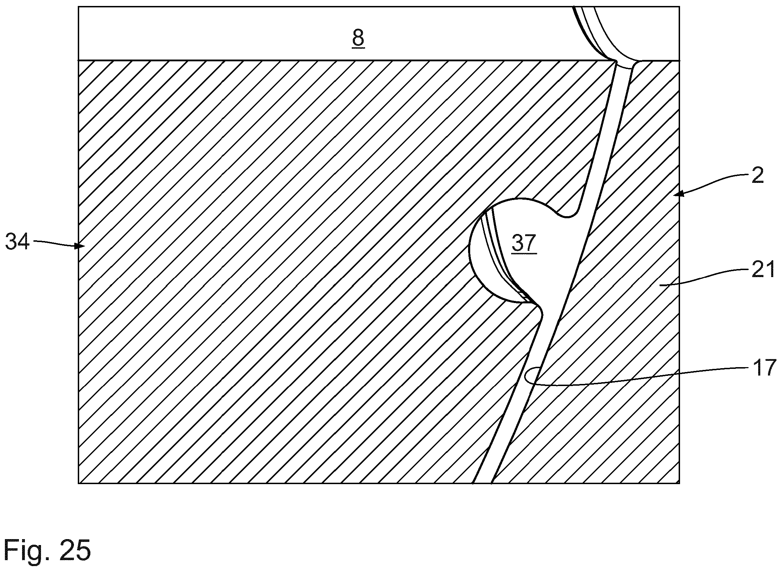

Das Drehteil 62 entspricht einem Segment eines Konus. Die in Fig. 21 nicht sichtbare Außenseite 63 des Drehteils 62 ist plan ausgeführt. Die der Außenseite 63 gegenüberliegende Fläche ist bereichsweise begradigt. Der begradigte Abschnitt 64 ist parallel zur Außenseite 63 ausgeführt. Nachfolgend wird anhand von Fig. 24 bis 26 eine weitere Ausführungsform einer Weiche erläutert.

Bei der Weiche 1 ist das Durchgangskanal-Dichtungselement 35 im Wesentlichen als O-Ring ausgeführt, der in einer korrespondierenden Dichtungsnut 37 angeordnet ist. Die Querschnittsform des Durchgangskanal-Dichtungselements 35 und die Kontur der Dichtungsnut 37 korrespondieren zueinander, sodass die Dichtungsnut 37 durch das Durchgangskanal-Dichtungselement 35 vollständig ausgefüllt ist. Toträume sind vermieden.

Das Durchgangskanal-Dichtungselement 35 weist einen Überstandsabschnitt auf, der zwei Übergangsfasen 39 umfasst, die sich in einer im Wesentlichen linienförmigen Oberfläche 43 treffen. Die linienförmige Oberfläche 43 bildet eine Kontaktkante des Durchgangskanal-Dichtungselements 35 an der Innenkontur 17 des Gehäuses 2.

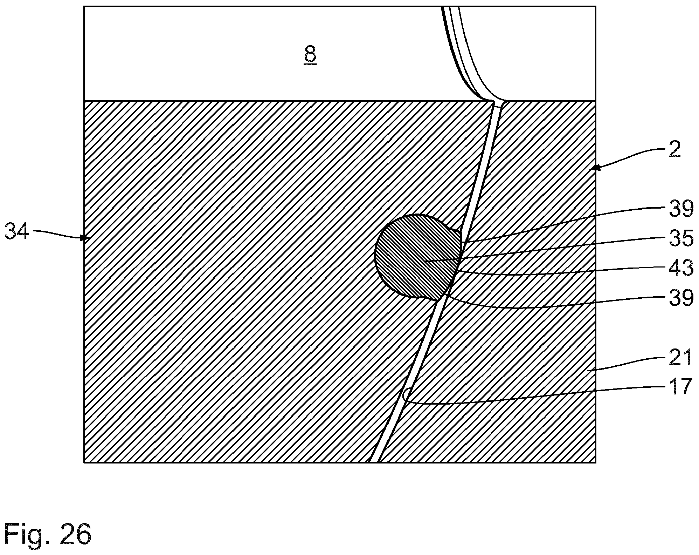

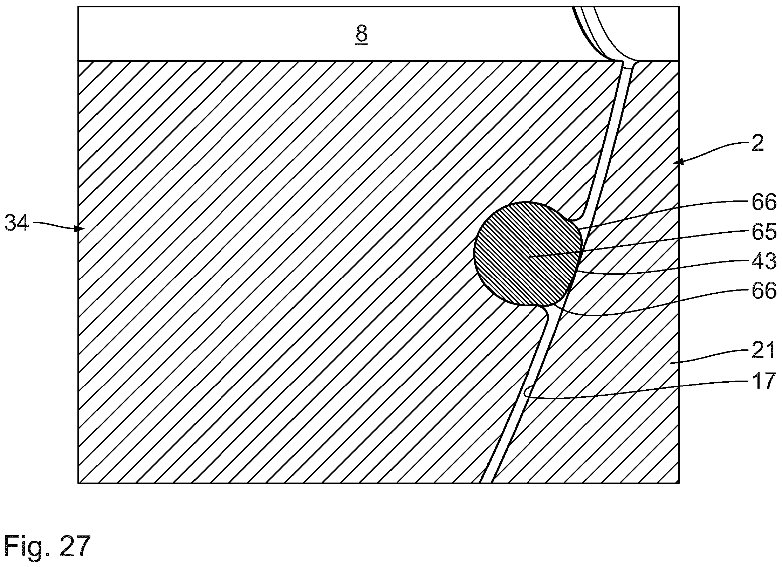

Nachfolgend wird anhand von Fig. 27 eine weitere Ausführungsform des Durchgangskanal-Dichtungselements erläutert. Das Durchgangskanal-Dichtungselement 65 ist wie die Ausführungsform gemäß Fig. 26 im Wesentlichen O-ringförmig ausgeführt. Der einzige Unterschied besteht darin, dass der Überstandsabschnitt anstelle der Überstandsfasen Überstandsabrundungen 66 aufweist, die einen Übergang in eine im Wesentlichen eben ausgeführte Oberfläche 43 zeigen. Die Kontaktfläche im Bereich der Oberfläche 43 von dem Durchgangskanal-Dichtungselement 65 mit der Innenkontur 17 des Gehäuses 2 ist dadurch vergrößert.

## Patentansprüche

1. Verfahren zum Reinigen einer Weiche für die Förderung von Fördergut umfassend die Verfahrensschritte:
- Beenden der Förderung von Fördergut,
- Beginn des Reinigens,
- Herausziehen eines Drehteils (6; 34; 40; 56; 60; 61; 62) entlang einer Drehachse (7) axial aus einem Gehäuse (2),
- Einleiten von Reinigungsflüssigkeit durch mindestens eine Durchgangsöffnung (3, 4, 5),
- Bewegen des Drehteils (6; 34; 40; 56; 60; 61; 62) drehbar um die Drehachse (7) während der Zuführung der Reinigungsflüssigkeit,
- Beenden der Zuführung der Reinigungsflüssigkeit,
- Entfernen der Reinigungsflüssigkeit aus der Weiche,
- Spülen der Weiche mit einer Spülflüssigkeit,
- Beenden der Zuführung der Spülflüssigkeit,
- Entfernen der Spülflüssigkeit aus der Weiche,
- Trocknen der Weiche durch Einleiten von heißem Gas, wobei das Drehteil (6; 34; 40; 56; 60; 61; 62) während des Trocknens drehbar um die Drehachse (7) bewegt wird.

2. Verfahren nach Anspruch 1, **dadurch gekennzeichnet, dass** die Geschwindigkeit der Reinigungsflüssigkeit und/oder der Spülflüssigkeit zwischen 1 m/s und 8 m/s liegt.

3. Verfahren nach Anspruch 1 oder 2, **dadurch gekennzeichnet, dass** das heiße Gas mit einer Geschwindigkeit von 15 m/s bis 40 m/s durch die angeschlossenen Rohrleitungen strömt.

4. Verfahren nach einem der vorstehenden Ansprüche, **dadurch gekennzeichnet, dass** das Drehteil während des Einleitens der Reinigungsflüssigkeit in einer Drehmittelposition derart angeordnet ist, dass das Drehteil (6; 34; 40; 56; 60; 61; 62) mit seiner Außenkontur (9) der mindestens einen Durchgangsöffnung (3,4,5) zugewandt ist und insbesondere das Drehteil (6; 34; 40; 56; 60; 61; 62) mit einem Durchgangskanal (8) nicht fluchtend mit der mindestens einen Durchgangsöffnung (3,4,5) angeordnet ist.

5. Verfahren nach Anspruch 4, **dadurch gekennzeichnet, dass** das Drehteil (6; 34; 40; 56; 60; 61; 62) mit einem Drehantrieb bewegt wird, der zwei Endpositionen aufweist und der eine Drehmittelposition, die zwischen den Endpositionen angeordnet ist, überfährt.

6. Verfahren gemäß Anspruch 4, **dadurch gekennzeichnet, dass** das Drehteil (6; 34; 40; 56; 60; 61; 62) mit einem Drehantrieb ausgeführt ist, der zwei Endpositionen und eine dazwischen angeordnete Drehmittelposition aufweist, die angefahren wird.

7. Weiche für die Förderung von Fördergut und zur Durchführung des Verfahrens gemäß einem der vorstehenden Ansprüche umfassend
a. ein Gehäuse (2) mit mindestens drei Durchgangsöffnungen (3, 4, 5) zum Zuführen oder Abführen des Förderguts, wobei die Durchgangsöffnungen (3, 4, 5) eine Förderebene festlegen,
b. ein eine Drehachse (7) aufweisendes Drehteil (6; 34; 40; 56; 60; 61; 62) mit einer bezüglich der Drehachse (7) zumindest abschnittsweise konisch ausgeführten Außenkontur (9), wobei das Drehteil (6; 34; 40; 56; 60; 61; 62) im Gehäuse (2) abgedichtet anordenbar ist, wobei das Drehteil (6; 34; 40; 56; 60; 61; 62) entlang der Drehachse (7) axial angetrieben verlagerbar ist und um die Drehachse (7) drehantreibbar angeordnet ist, wobei die Drehachse (7) senkrecht zur Förderebene orientiert ist,
c. ein im Drehteil (6; 34; 40; 56; 60; 61; 62) angeordneter Durchgangskanal (8), der in Abhängigkeit einer Drehposition des Drehteils (6; 34; 40; 56; 60; 61; 62) jeweils zwei Durchgangsöffnungen (3, 4, 5) zur Fördergutförderung entlang des Durchgangskanals (8) durch die Weiche (1; 53; 54) miteinander verbindet,
d. Durchgangskanal-Dichtungselemente (35),
- die bezüglich einer Durchgangskanal-Längsachse (36) umlaufend an dem Drehteil (34) angeordnet sind,
- die jeweils in einer Dichtungsnut (37) des Drehteils (34) gehalten sind,
- die an einer Außenkontur des Drehteils (34) mit einem Überstandsabschnitt vorstehen,
**dadurch gekennzeichnet, dass**
der Überstandsabschnitt mindestens eine Übergangsfase (39) für einen bündigen Übergang der Oberflächen des Drehteils (34) und des Durchgangskanal-Dichtungselements (35; 65) aufweist.

8. Weiche gemäß Anspruch 7, **gekennzeichnet durch** einen Drehantrieb (23) zum drehbaren Verlagern des Drehteils (6; 34; 40; 56; 60; 61; 62) um die Drehsachse (7) und der eine Mittelstellung des Drehteils ermöglicht.

9. Weiche gemäß einem der Ansprüche 7 bis 8, **dadurch gekennzeichnet, dass** ein Konuswinkel (κ) der Außenkontur (9) des Drehteils (6; 34; 40; 56; 60; 61; 62) zwischen 5° und 80°, insbesondere zwischen 10° und 40°, insbesondere zwischen 15° und 25° beträgt.

10. Weiche gemäß einem der Ansprüche 7 bis 9, **gekennzeichnet durch** einen zwischen der Außenkontur (9) des Drehteils (6) und der Innenkontur (17) des Gehäuses (2) ausgebildeten Radialspalt (31) zum Abdichten des Drehteils (6) im Gehäuse (2), wobei der Radialspalt (31) insbesondere zwischen 0,01 mm und 0,5 mm, insbesondere zwischen 0,02 mm und 0,3 mm, insbesondere zwischen 0,03 mm und 0,2 mm und insbesondere zwischen 0,05 mm und 0,1 mm beträgt.

11. Weiche gemäß einem der Ansprüche 7 bis 8, **dadurch gekennzeichnet, dass** das Drehteil (40) mit seiner Außenkontur (9) an der Innenkontur (17) des Gehäuses (2) unmittelbar anliegt.

12. Weiche gemäß einem der Ansprüche 7 oder 11, **gekennzeichnet durch** Konus-Dichtungselemente (16) die bezüglich der Drehachse (7) umlaufend an dem Drehteil (6; 34; 40; 56; 60; 61; 62) angeordnet sind, wobei der Durchgangskanal (8) bezüglich der Drehachse (7) zwischen den Konus-Dichtungselementen (16) angeordnet ist.

13. Weiche gemäß Anspruch 7 oder 8, **dadurch gekennzeichnet, dass** die Durchgangskanal-Dichtungselemente (35; 65) spaltfrei an der Oberfläche (38) des Drehteils (34) verpresst sind.

14. Weiche gemäß einem der Ansprüche 7, 8 oder 13, **dadurch gekennzeichnet, dass** das Durchgangskanal-Dichtungselement (35; 65) in der Dichtungsnut (37) formschlüssig gehalten ist.

15. Weiche gemäß einem der Ansprüche 7, 8, 13 oder 14, **dadurch gekennzeichnet, dass** die mindestens eine Übergangsfase (39) umlaufend ist.

## Claims

1. Method for cleaning a diverter valve for conveying material to be conveyed, the method comprising the following method steps:
- terminating the conveying of material to be conveyed,
- starting the cleaning process,
- pulling a rotary part (6; 34; 40; 56; 60; 61; 62) axially out of a housing (2) along an axis of rotation (7),
- introducing cleaning liquid through at least one passage opening (3, 4, 5),
- rotating the rotating part (6; 34; 40; 56; 60; 61; 62) rotatably about the axis of rotation (7) while the cleaning liquid is being fed,
- terminating the feeding of the cleaning liquid,
- removing the cleaning liquid from the diverter valve,
- rinsing the diverter valve with a rinsing liquid,
- terminating the feeding of the rinsing liquid,
- removing the rinsing liquid from the diverter valve,
- drying the diverter valve by introducing hot gas, wherein the rotary part (6; 34; 40; 56; 60; 61; 62) is rotatably moved about the axis of rotation (7) during drying.

2. Method as claimed in claim 1, **characterized in that** the speed of the cleaning liquid and/or the rinsing liquid is between 1 m/s and 8 m/s.

3. Method as claimed in claim 1 or 2, **characterized in that** the hot gas flows through the connected pipelines at a speed of 15 m/s to 40 m/s.

4. Method as claimed in any one of the preceding claims, **characterized in that** while introducing the cleaning liquid, the rotary part is arranged in a rotary central position such that the rotary part (6; 34; 40; 56; 60; 61; 62) faces, with its outer contour (9), the at least one passage opening (3, 4, 5), and in particular a passage duct (8) of the rotary part (6; 34; 40; 56; 60; 61; 62) is arranged as to be out of line with the at least one passage opening (3, 4, 5).

5. Method as claimed in claim 4, **characterized in that** the rotary part (6; 34; 40; 56; 60; 61; 62) is moved with a rotary drive, which has two end positions and passes over a rotary central position arranged between the end positions.

6. Method as claimed in claim 4, **characterized in that** the rotary part (6; 34; 40; 56; 60; 61; 62) is designed with a rotary drive, which has two end positions and a rotary central position arranged therebetween that is approached.

7. Diverter valve for conveying material to be conveyed and for performing the method as claimed in any one of the preceding claims, comprising
a. a housing (2) with at least three passage openings (3, 4, 5) to feed or discharge the material to be conveyed, the passage openings (3, 4, 5) defining a conveying plane,
b. a rotary part (6; 34; 40; 56; 60; 61; 62) having an axis of rotation (7) and an outer contour (9) designed conically at least in sections relative to the axis of rotation (7), wherein the rotary part (6; 34; 40; 56; 60; 61; 62) can be arranged in the housing (2) in a sealed manner, the rotary part (6; 34; 40; 56; 60; 61; 62) being displaceable along the axis of rotation (7) in an axially driven manner and being arranged such as to be drivable in rotation about the axis of rotation (7), the axis of rotation (7) being oriented perpendicularly to the conveying plane,
c. a passage duct (8) arranged in the rotary part (6; 34; 40; 56; 60; 61; 62), the passage duct (8) connecting, depending on a rotary position of the rotary part (6; 34; 40; 56; 60; 61; 62), in each case two passage openings (3, 4, 5) to convey material to be conveyed through the diverter valve (1; 53; 54) along the passage duct (8),
d. passage duct sealing members (35),
- which are arranged circumferentially on the rotary part (34) in relation to a passage duct longitudinal axis (36),
- which are each retained in a sealing groove (37) of the rotary part (34),
- which protrude from an outer contour of the rotary part (34) with a protruding section,
**characterized in that**
the protruding section has at least one transition chamfer (39) for a smooth transition of the surfaces of the rotary part (34) and the passage duct sealing member (35; 65).

8. Diverter valve as claimed in claim 7, **characterized by** a rotary drive (23) for rotatably displacing the rotary part (6; 34; 40; 56; 60; 61; 62) about the axis of rotation (7), the rotary drive (23) enabling a central position of the rotary part.

9. Diverter valve as claimed in any one of claims 7 to 8, **characterized in that** a cone angle (κ) of the outer contour (9) of the rotating part (6; 34; 40; 56; 60; 61; 62) is between 5° and 80°, in particular between 10° and 40°, in particular between 15° and 25°.

10. Diverter valve as claimed in any one of claims 7 to 9, **characterized by** a radial gap (31) formed between the outer contour (9) of the rotary part (6) and the inner contour (17) of the housing (2) to seal the rotary part (6) in the housing (2), the radial gap (31) in particular amounting to between 0.01 mm and 0.5 mm, in particular between 0.02 mm and 0.3 mm, in particular between 0.03 mm and 0.2 mm and in particular between 0.05 mm and 0.1 mm.

11. Diverter valve as claimed in any one of the claims 7 to 8, **characterized in that** the rotary part (40) is in direct contact, with its outer contour (9), with the inner contour (17) of the housing (2).

12. Diverter valve as claimed in any one of claims 7 or 11, **characterized by** cone sealing members (16) arranged circumferentially on the rotary part (6; 34; 40; 56; 60; 61; 62) in relation to the axis of rotation (7), the passage duct (8) being arranged between the cone sealing members (16) in relation to the axis of rotation (7).

13. Diverter valve as claimed in claim 7 or 8, **characterized in that** the passage duct sealing members (35; 65) are pressed without gaps on the surface (38) of the rotary part (34).

14. Diverter valve as claimed in any one of claims 7, 8 or 13, **characterized in that** the passage duct sealing member (35; 65) is retained in the sealing groove (37) in a form-fitting manner.

15. Diverter valve as claimed in any one of claims 7, 8, 13 or 14, **characterized in that** the at least one transition chamfer (39) is circumferential.

## Revendications

1. Procédé de nettoyage d'un aiguillage destiné au transport de produits à transporter, comprenant les étapes de procédé suivantes :
- arrêter le transport de produits à transporter,
- début du nettoyage,
- extraire axialement d'un boîtier (2) une pièce rotative (6 ; 34 ; 40 ; 56 ; 60 ; 61 ; 62) le long d'un axe de rotation (7),
- l'introduction de liquide de nettoyage par au moins un orifice de passage (3, 4, 5),
- déplacer la pièce rotative (6 ; 34 ; 40 ; 56 ; 60 ; 61 ; 62) de manière rotative autour de l'axe de rotation (7) pendant l'alimentation en liquide de nettoyage,
- arrêter l'alimentation en liquide de nettoyage,
- éliminer le liquide de nettoyage de l'aiguillage,
- rincer l'aiguillage avec un liquide de rinçage,
- arrêter l'alimentation en liquide de rinçage,
- éliminer le liquide de rinçage de l'aiguillage,
- sécher l'aiguillage par introduction de gaz chaud, la pièce rotative (6 ; 34 ; 40 ; 56 ; 60 ; 61 ; 62) étant déplacée en rotation autour de l'axe de rotation (7) pendant le séchage.

2. Procédé selon la revendication 1, **caractérisé en ce que** la vitesse du liquide de nettoyage et/ou du liquide de rinçage est comprise entre 1 m/s et 8 m/s.

3. Procédé selon la revendication 1 ou 2, **caractérisé en ce que** le gaz chaud s'écoule à une vitesse de 15 m/s à 40 m/s dans les conduites raccordées.

4. Procédé selon l'une quelconque des revendications précédentes, **caractérisé en ce que** la pièce rotative est disposée dans une position centrale de rotation pendant l'introduction du liquide de nettoyage de telle sorte que la pièce rotative (6 ; 34 ; 40 ; 56 ; 60 ; 61 ; 62) est tournée avec son contour extérieur (9) vers l'au moins un orifice de passage (3, 4, 5) et en particulier la pièce rotative (6 ; 34 ; 40 ; 56 ; 60 ; 61 ; 62) est disposée avec un conduit de passage (8) non aligné avec l'au moins un orifice de passage (3, 4, 5).

5. Procédé selon la revendication 4, **caractérisé en ce que** la pièce rotative (6 ; 34 ; 40 ; 56 ; 60 ; 61 ; 62) est déplacée avec un entraînement rotatif qui présente deux positions finales et qui passe par une position centrale de rotation qui est disposée entre les positions finales.

6. Procédé selon la revendication 4, **caractérisé en ce que** la pièce rotative (6 ; 34 ; 40 ; 56 ; 60 ; 61 ; 62) est réalisée avec un entraînement rotatif qui présente deux positions finales et une position centrale de rotation disposée entre celles-ci, qui est approchée.

7. Aiguillage destiné au transport de produits à transporter et pour la mise en oeuvre du procédé selon l'une quelconque des revendications précédentes, comprenant
a. un boîtier (2) avec au moins trois orifices de passage (3, 4, 5) pour l'alimentation ou l'évacuation des produits à transporter, les orifices de passage (3, 4, 5) définissant un plan de transport,
b. une pièce rotative (6 ; 34 ; 40 ; 56 ; 60 ; 61 ; 62) présentant un axe de rotation (7) avec un contour extérieur (9) réalisé de manière conique au moins par sections par rapport à l'axe de rotation (7), la pièce rotative (6 ; 34 ; 40 ; 56 ; 60 ; 61 ; 62) pouvant être disposée de manière étanche dans le boîtier (2), la pièce rotative (6 ; 34 ; 40 ; 56 ; 60 ; 61 ; 62) pouvant être déplacée en étant entraînée axialement le long de l'axe de rotation (7) et étant disposée de manière à pouvoir être entraînée en rotation autour de l'axe de rotation (7), l'axe de rotation (7) étant orienté perpendiculairement au plan de transport,
c. un conduit de passage (8) disposé dans la partie rotative (6 ; 34 ; 40 ; 56 ; 60 ; 61 ; 62) qui, en fonction d'une position de rotation de la partie rotative (6 ; 34 ; 40 ; 56 ; 60 ; 61 ; 62), relie respectivement deux orifices de passage (3, 4, 5) pour le transport des produits à transporter le long du conduit de passage (8) à travers l'aiguillage (1 ; 53 ; 54),
d. des éléments d'étanchéité du conduit de passage (35),
- qui sont disposés sur la pièce rotative (34) de manière circulaire par rapport à un axe longitudinal du conduit de passage (36),
- qui sont maintenes chacun dans une rainure d'étanchéité (37) de la pièce rotative (34),
- qui font saillie sur un contour extérieur de la pièce rotative (34) avec une section en saillie,
**caractérisé en ce que**
la section en saillie présente au moins un chanfrein de transition (39) pour une transition affleurante des surfaces de la pièce rotative (34) et de l'élément d'étanchéité du conduit de passage (35 ; 65).

8. Aiguillage selon la revendication 7, **caractérisé par** un entraînement rotatif (23) pour le déplacement rotatif de la partie rotative (6 ; 34 ; 40 ; 56 ; 60 ; 61 ; 62) autour de l'axe de rotation (7) et qui permet une position centrale de la partie rotative.

9. Aiguillage selon l'une quelconque des revendications 7 à 8, **caractérisé en ce qu'un** angle de cône (κ) du contour extérieur (9) de la pièce rotative (6 ; 34 ; 40 ; 56 ; 60 ; 61 ; 62) est compris entre 5° et 80°, en particulier entre 10° et 40°, en particulier entre 15° et 25°.

10. Aiguillage selon l'une quelconque des revendications 7 à 9, **caractérisé par** une fente radiale (31) formée entre le contour extérieur (9) de la pièce rotative (6) et le contour intérieur (17) du boîtier (2) pour assurer l'étanchéité de la pièce rotative (6) dans le boîtier (2), la fente radiale (31) étant en particulier comprise entre 0,01 mm et 0,5 mm, en particulier entre 0,02 mm et 0,3 mm, en particulier entre 0,03 mm et 0,2 mm et en particulier entre 0,05 mm et 0,1 mm.

11. Aiguillage selon l'une quelconque des revendications 7 à 8, **caractérisé en ce que** la pièce rotative (40) s'applique directement par son contour extérieur (9) contre le contour intérieur (17) du boîtier (2).

12. Aiguillage selon l'une quelconque des revendications 7 ou 11, **caractérisé par** des éléments d'étanchéité coniques (16) qui sont disposés sur la partie rotative (6 ; 34 ; 40 ; 56 ; 60 ; 61 ; 62) de manière circulaire par rapport à l'axe de rotation (7), le conduit de passage (8) étant disposé entre les éléments d'étanchéité coniques (16) par rapport à l'axe de rotation (7).

13. Aiguillage selon la revendication 7 ou 8, **caractérisé en ce que** les éléments d'étanchéité (35 ; 65) du conduit de passage sont pressés sans fente sur la surface (38) de la pièce rotative (34).

14. Aiguillage selon l'une quelconque des revendications 7, 8 ou 13, **caractérisé en ce que** l'élément d'étanchéité du conduit de passage (35 ; 65) est maintenu par engagement positif dans la rainure d'étanchéité (37).

15. Aiguillage selon l'une quelconque des revendications 7, 8, 13 ou 14, **caractérisé en ce que** l'au moins un chanfrein de transition (39) est périphérique.
